# FASCICULE DE BREVET EUROPEEN

(11) **EP 2 872 594 B1**
(45) Date de publication et mention de la délivrance du brevet: **09.08.2017**
(21) Numéro de dépôt: 13736907.0
(22) Date de dépôt: 12.07.2013
(51) Int. Cl.: C09K 21/02, C08K 3/22, C08K 3/00

(54) **COMPOSITIONS POLYMERES IGNIFUGEES ET RESISTANTES AU FEU A BASE DE CHAUX A HAUTE SURFACE SPECIFIQUE**
FLAMMHEMMENDE UND FEUERBESTÄNDIGE POLYMERZUSAMMENSETZUNGEN AUS KALK MIT HOCHSPEZIFISCHER OBERFLÄCHE
FLAME-RETARDANT AND FIRE-RESISTANT POLYMER COMPOSITIONS MADE FROM LIME HAVING A HIGH SPECIFIC SURFACE

(30) Priorité: 12.07.2012 BE 201200486; 05.09.2012 US 201261696967 P
(43) Date de publication de la demande: 20.05.2015
(73) Titulaire: S.A. Lhoist Recherche et Développement, 1342 Ottignies-Louvain-la-Neuve (BE)
(72) Inventeur: LORGOUILLOUX, Marion, B-7110 Strépy Bracquegnies (BE); LESUEUR, Didier, B-1440 Braine-le-Château (BE); PELLETIER, Marc, F-94160 Saint-Mandé (FR); LAOUTID, Fouad, F-59130 Lambersart (FR); DUBOIS, Philippe, B-4260 Braives (BE)
(74) Mandataire: Gevers Patents
(86) Numéro de dépôt international: PCT/EP2013/064791
(87) Numéro de publication internationale: WO 2014/009526

(56) Documents cités:
- EP-B1- 1 896 364
- DE-A1-102009 034 700
- US-A1- 2005 113 500
- US-A1- 2006 188 428

## Description

La présente invention se rapporte au domaine des charges minérales à ajouter à des polymères pour former des compositions polymères ignifugées. Plus particulièrement, la présente invention se rapporte à des compositions polymères ignifugées comprenant un polymère et une charge minérale comprenant un composé calcique.

On connait du document US2006/0188428 des charges issues de dolomie à ajouter dans des plastiques pour leur capacité antimicrobienne de capture d'HCl lors de l'incinération des plastiques.

Les additifs retardateurs de flamme (*flame retardant* en anglais) ou additifs ignifuges ou encore ignifugeants sont incorporés dans des matrices polymères afin de ralentir ou stopper la combustion du polymère dans le cas d'un incendie.

On connait par exemple du document DE102009034700 l'utilisation de composés dolomitiques comme retardateurs de flamme lorsqu'ils sont ajoutés à des compositions polymères.

On distingue entre autres deux catégories d'effets de ces additifs retardateurs de flamme (appelés charges dans la suite du texte), à savoir les effets chimiques et les effets physiques.

Parmi les effets chimiques, on trouve l'accélération de la rupture des chaînes du polymère sous l'effet de la température qui conduit à un polymère fondu qui va goutter et quitter la zone chaude de l'incendie. On trouve aussi, dans le cas des systèmes à base de retardateurs de flamme phosphorés, la formation d'une couche de charbonnement non cohésive par réaction entre la charge et le polymère ; cette couche sert ensuite de barrière et empêche le dégagement de gaz combustibles qui alimentent l'incendie. Egalement, on retrouve des charges qui, lors de la montée en température, libèrent des composés non inflammables ou qui piègent les radicaux libres présents dans la phase gazeuse. Certains de ces effets chimiques sont obtenus en utilisant des charges halogénées (bromures et chlorures) qui sont progressivement abandonnées pour des raisons toxicologiques et environnementales.

Parmi les effets physiques, on trouve la réaction de décomposition endothermique de la charge qui provoque le refroidissement du polymère et la libération de gaz inertes comme de la vapeur d'eau ou du dioxyde de carbone qui vont agir ensuite comme diluants des gaz comburants et combustibles. Enfin, on trouve également la formation d'une couche protectrice de faible cohésion issue de la dégradation de la charge, couche qui va à nouveau empêcher la libération de gaz combustibles. Ces effets physiques sont généralement obtenus avec des charges (fillers) minérales.

De manière générale, les compositions comprenant d'une part les charges minérales et d'autre part les polymères doivent présenter certaines caractéristiques pour être, en pratique, applicables. Tout d'abord, l'effet retardateur de flamme doit pouvoir être quantifié afin d'évaluer l'intérêt de telles compositions. La méthode normalisée du cône calorimètre (ISO 5660-1 ou ASTM E 1354) est utilisée pour déterminer le dégagement de chaleur (noté HRR pour Heat Rate Release et exprimé en kW/m²) d'une composition de polymère contenant éventuellement des charges minérales, lorsque celle-ci est exposée à un niveau contrôlé de chaleur rayonnante. Cette méthode, nommée ci-après « test au feu », permet en outre de déterminer l'inflammabilité, la perte de masse, la production de fumées ou encore la chaleur de combustion d'une composition. Pour un polymère chargé, une quantité peu élevée de chaleur traduit un bon effet retardateur de flamme des charges minérales.

Il existe d'autres méthodes pour évaluer l'effet retardateur de flamme telles que le LOI (Limiting Oxygen Index,selon la norme ASTM D 2863), l'essai dit de "l'épiradiateur" (NF P92-505) ou encore des méthodes, qui correspondent généralement à des applications précises des polymères chargés (câbles, appareillage électrique, accessoires électriques...) parmi lesquelles l'essai d'inflammation UL94, les diverses modalités de l'essai dit « du fil incandescent » (IEC 60695-2), le cône calorimètre adapté aux câbles (EN 50399)...

Par ailleurs, étant donné la proportion élevée de ces charges minérales dans les compositions, il est important d'évaluer l'impact que les charges minérales ont sur les propriétés mécaniques des compositions polymères. Dès lors, les polymères chargés devront présenter des caractéristiques de résistance mécanique (traction, impact) acceptables.

Pour nombre de matrices polymères, les propriétés mécaniques des compositions de polymère ignifugées par l'ajout de charges peuvent être améliorées par un traitement de surface desdites charges préalablement à leur incorporation dans la matrice polymère.

Les charges minérales les plus courantes à utiliser avec des polymères pour obtenir un effet retardateur de flamme sont principalement le trihydroxyde d'aluminium Al(OH)₃, également appelé ATH et le dihydroxyde de magnésium Mg(OH)₂, aussi appelé MDH.

Le document US2005/188428 décrit par exemple l'utilisation de trihydroxyde d'aluminium, d'hydroxyde de magnésium et de dihydroxyde de calcium comme additif retardateur de flamme. Ce document se focalise sur la taille des particules en mentionnant leur surface spécifique de Blaine (§29) pour faciliter l'incorporation et la consommation de la charge minérale dans le polymère. En outre, il stipule que l'ajout de particules fines pourrait améliorer l'effet retardateur de flamme.

Si ces deux hydroxydes (d'aluminium et de magnésium) ont un effet retardateur de flamme efficace du fait de leurs propriétés particulières qui conduisent aux effets physiques listés ci-dessus, ils n'ont en revanche aucun effet sur la cohésion du résidu de combustion. A l'issue de leur combustion, les compositions de polymère chargées avec de l'ATH ou du MDH se présentent sous la forme d'une cendre noire/grise (composée d'oxyde de magnésium ou d'aluminium et de restes de polymère carbonisé), non cohésive, qui se réduit en poussière sous la moindre contrainte mécanique.

Le dihydroxyde de calcium, Ca(OH)₂, souvent obtenu par hydratation (extinction) d'une chaux vive, se décompose de manière endothermique (consommation de 900 kJ/kg) autour de 400 °C en libérant de l'eau et en donnant lieu à la formation d'un oxyde, CaO. Ca(OH)₂ apparaît de ce fait comme un hydroxyde minéral présentant toutes les propriétés nécessaires pour pouvoir être utilisé en tant que charge retardatrice de flamme. Toutefois, la température de décomposition de Ca(OH)₂ est élevée en comparaison de celles de l'ATH et du MDH, et Ca(OH)₂ n'est donc efficace en tant que retardateur de flamme qu'à relativement haute température, le risque étant qu'à cette température, le polymère soit déjà totalement dégradé. Par ailleurs, du fait de sa forte basicité (pH supérieur à 12), Ca(OH)₂ peut être utilisé en tant que charge uniquement dans des matrices polymères dont les propriétés ne sont pas dégradées au contact de particules de pH élevé.

Ca(OH)₂ est de ce fait moins courant que l'ATH et le MDH.

La caractérisation des résidus de combustion obtenus après calcination des compositions polymères chargées, appelés dans certains cas résidus charbonneux, permettra d'évaluer l'utilité de certaines charges dans les compositions polymère en vue de certaines applications.

L'état du résidu de combustion des compositions polymères a été beaucoup étudié dans les dernières années. Il est en effet avantageux d'avoir des compositions polymères qui, en plus d'être retardatrices de flamme, conservent leur forme pendant l'incendie. En particulier, dans le cas des pièces plastiques utilisées dans les domaines électriques ou électroniques (équipement électrique ou électronique, câbles électriques et/ou de communication...) et surtout dans le domaine des gaines de câbles électriques en polymères, où il est préférable que, pendant le déroulement d'un incendie, la gaine de câble reste autour du câble conducteur afin de continuer d'en assurer le fonctionnement et afin d'éviter des courts-circuits.

Il n'existe pas à l'heure actuelle de définition standard de la cohésion des résidus de combustion issus de compositions polymères. Au sens de l'invention, on entend par « résidu cohésif » un résidu de combustion qui n'est pas une cendre, ni une poussière, ni une poudre, mais bien un solide cohésif présentant une certaine unité (par opposition à un solide divisé). Ce résidu a globalement la même 'forme' et occupe la même place que la composition polymère initiale dont il est issu. En particulier, ce résidu peut être poreux et assimilé de ce fait à un résidu intumescent. Lorsqu'un tel résidu est obtenu, on parle d'effet de résistance au feu, parfois appelé effet céramisant. Ce résidu cohésif est un résidu qui, après combustion selon la méthode normalisée du cône calorimètre ISO 5660-1 ou ASTM E 1354, n'est traversé que par un nombre de fissures très limité, inférieur ou égal à 3, de préférence inférieur ou égal à 2, voire à 1 et de manière particulièrement préférentielle nul.

De manière avantageuse, ce résidu peut, en plus de sa cohésion, avoir une certaine résistance mécanique en compression, appelée plus simplement dans la suite « résistance mécanique ».

A l'heure actuelle, il semble que la combinaison d'un effet retardateur de flamme et d'un effet résistant au feu menant à la formation d'un résidu cohésif, bien que très recherchée et appréciée, ne soit obtenue qu'en présence de formulations complexes contenant de l'ATH ou du MDH en tant que charge retardatrice de flamme, associée avec des nanoparticules (argiles, nanotubes de carbone, silice ...), du borate de zinc ... en tant qu'agent résistant au feu ou céramisant. Ces agents céramisants sont couteux, difficiles à incorporer au polymère et présentent pour nombre d'entre eux un profil écotoxique défavorable qui en limite l'usage et rend nécessaire la recherche de substituts.

Des charges minérales calciques ont déjà été décrites dans l'art antérieur. Par exemple, le document d'Ashley et coll. publié dans « Plastic, Rubber and Composites Processing and Application, vol 15, n°1, 1991 » divulgue une étude comparative de diverses charges minérales dans un acétate d'éthylène vinylique (EVA) qui est le polymère généralement de référence. Ce document divulgue que l'hydroxyde de calcium est potentiellement intéressant de par sa décomposition endothermique, mais qu'il présente toutefois un effet limité sur l'indice d'oxygène (LOI) de l'EVA. En revanche, une cendre dure ('strong ash' dans le texte en anglais) est formée lors de l'utilisation de Ca(OH)₂. Cette cendre a été analysée et est majoritairement composée de carbonate de calcium CaCO₃. La cendre dure obtenue à l'issue de la combustion est alors présumée être le résultat de la réaction entre l'hydroxyde de calcium et le CO₂ produit pendant la combustion.

Ces résultats, c'est-à-dire un effet retardateur de flamme limité (sur le LOI et sur le temps d'ignition) et la formation d'une cendre dure composée majoritairement de CaCO₃, ont été confirmés dans d'autres matrices polymères. Cependant, la réaction de carbonatation de Ca(OH)₂ en CaCO₃ étant exothermique, les auteurs concluent qu'il n'est pas pertinent d'utiliser Ca(OH)₂ en tant que retardateur de flamme.

Le document de Focke et coll. publié dans « Journal of Chemical Engineering, vol 9, n°2, 1997 » évalue quant à luidifférentes charges minérales en tant que retardateur de flamme. Plusieurs composés sont comparés, notamment un hydroxyde d'aluminium, de l'acide borique, un hydroxyde de calcium, un sulfate de calcium, de la colemanite (borate de calcium), un hydroxyde de magnésium, un borate de zinc et un composé appelé UltraCarb qui est un mélange d'huntite (de formule CaMg₃(CO₃)₄) et d'hydromagnésite (de formule Mg₅(CO₃)₄(OH)₂.4H₂O) finement divisé.

Trois paramètres sont étudiés pour chacune de ces charges : le refroidissement du substrat (effet endothermique de la décomposition de la charge), la dilution des gaz de combustion par des gaz inertes (libération d'eau et/ou de CO₂ par la charge) et la formation d'une couche de charbonnement ('char' en anglais, 'ash-char barrier layer' en particulier dans ce document).

Certaines charges qui sont très efficaces pour le refroidissement et la dilution des gaz s'avèrent en revanche défavorables à la formation de la couche de charbonnement. En effet, les oxydes formés lors de la décomposition des hydroxydes catalysent l'oxydation de la couche de charbonnement, conduisant à un charbonnement moindre pour les polymères chargés que pour les polymères non chargés et limitant ainsi l'effet barrière, qui améliore pourtant le caractère retardateur de flamme des compositions.

Parmi les hydroxydes donnant lieu à ce phénomène, l'hydroxyde de Ca est celui qui conduit au meilleur charbonnement, non pas que l'oxydation soit moindre, mais du fait de la formation de CaCO₃ par réaction du CaO formé lors de la décomposition avec le CO₂ formé pendant la combustion du polymère. Dans la liste des charges testées, seul l'acide borique ne catalyse pas l'oxydation de la couche de charbonnement et conduit à la formation d'un charbonnement cohésif et d'un résidu vitreux. Toutes les autres charges conduisent à la formation de résidus pulvérulents.

CaCO₃ étant considéré comme un catalyseur de la dégradation exothermique de polyoléfines, la carbonatation de CaO lors de l'utilisation de Ca(OH)₂ comme charge peut être vue comme étant une réaction favorisant la combustion. Les auteurs concluent que Ca(OH)₂ ne peut donc pas être utilisé en tant que retardateur de flamme.

Ces deux documents divulguent la formation de CaCO₃ au cours de la combustion de compositions polymères chargées avec Ca(OH)₂. A cause de cette carbonatation, ils déconseillent l'utilisation de Ca(OH)₂ en tant que charge retardatrice de flamme, d'une part parce que cette réaction de carbonatation est exothermique et d'autre part parce que CaCO₃ est considéré comme un catalyseur de la réaction de dégradation des polyoléfines. Dans les deux cas, les résidus de combustion obtenus en présence de Ca(OH)₂ ne sont pas cohésifs, mais pulvérulents, la définition même d'une cendre étant 'une poudre résultant de la combustion de certaines matières'. Il n'est par ailleurs jamais fait référence dans ces documents à la porosité des charges utilisées, en particulier à la surface spécifique ou au volume poreux des hydroxydes de calcium.

La présente invention a donc pour but de proposer des charges minérales comprenant au moins un composé calcique afin de bénéficier de ses avantages notamment en termes d'endothermicité (effet retardateur de flamme) tout en permettant des caractéristiques mécaniques acceptables pour la composition polymère contenant la charge minérale et qui permet de former un résidu de combustion cohésif (effet de résistance au feu), sans nécessiter le recours à des agents céramisants couteux et difficiles à incorporer.

A cette fin, la composition polymère ignifugée selon la présente invention est caractérisée en ce que le composé calcique est un additif de résistance au feu sous forme d'hydroxyde de calcium de formule générale xCa(OH)₂.yMg(OH)₂.zl, où x, y et z sont des proportions massiques avec y compris entre 0,4 et 58,0 %, la somme des x, y et z valant 100% et la somme de x et y étant supérieure ou égale à 88 %, I représente les impuretés et présentant une surface spécifique calculée selon la méthode BET supérieure à 25 m²/g, de préférence supérieure à 30 m²/g, de manière plus préférentielle, supérieure à 35 m²/g et avantageusement supérieure à 40 m²/g. La surface spécifique est en particulier inférieure à 60 m²/g, notamment inférieure à 55 m²_{/}g_{.}

Il est en effet apparu selon la présente invention que la surface spécifique élevée de l'hydroxyde de calcium permettait la formation de résidu de combustion particulièrement cohésif et éventuellement intumescent. En effet, au cours de la décomposition de la matrice polymère, de fortes concentrations de CO₂ sont libérées dans l'atmosphère de la zone de combustion. Ce CO₂ est rapidement capté par le Ca(OH)₂ présent initialement dans la charge de la composition selon l'invention puisque le Ca(OH)₂ présente une surface spécifique importante et donc une capacité d'adsorption des gaz élevée, pour former du carbonate de calcium de formule CaCO₃. Ce CaCO₃ est un solide cohésif qui ne s'effondre pas sous la forme de cendres comme c'est le cas du résidu obtenu en fin de combustion pour les compositions à base d'ATH ou de MDH. Pour une même matrice polymère, la résistance du solide cohésif à base de CaCO₃ est d'autant plus élevée que la surface spécifique de l'hydroxyde de Ca utilisé comme charge dans la composition polymère est importante.

Ce résidu de combustion cohésif et éventuellement intumescent à base de carbonate de calcium, au contraire des résidus de combustion non cohésifs obtenus avec l'ATH ou le MDH, est particulièrement efficace dans certaines applications, comme par exemple celle des câbles électriques gainés où le résidu cohésif protégera les câbles électriques des dégâts du feu et des courts-circuits en permettant à la gaine du câble de continuer à jouer son rôle protecteur même à hautes températures.

La surface spécifique élevée de la charge calcique favorise sa réaction de carbonatation au cours de la combustion des compositions selon l'invention, et permet en effet une capture très importante des gaz de combustion qui sont capturés dans la charge minérale et provoquent la cohésion et l'effet intumescent du résidu de combustion. Cette capture des gaz de combustion a un effet double. D'une part, elle conduit à la formation d'un résidu encore plus cohésif éventuellement intumescent tel que décrit précédemment. D'autre part, la capture du CO₂ lors de la combustion déplace l'équilibre de combustion vers la formation de CO₂ au détriment de CO, diminuant la toxicité des fumées. Ceci constitue un effet additionnel positif lié à la présence de Ca(OH)₂ de haute surface spécifique, dans la composition polymère ignifugée selon l'invention.

L'hydroxyde de calcium utilisé au sens de la présente invention est en particulier de la chaux hydratée également appelée chaux éteinte. Ce composé calcique est un composé généralement pulvérulent formant un ensemble de particules solides, principalement constituées d'hydroxyde de calcium Ca(OH)₂.

Cette chaux éteinte peut évidemment contenir des impuretés, à savoir des phases dérivées de SiO₂, Al₂O, Fe₂O₃, MnO, P₂O₅, K₂O et/ou SO₃ à hauteur de quelques dizaines de grammes par kilogramme. Néanmoins, la somme de ces impuretés, exprimées sous la forme des oxydes précités, ne dépasse pas 5 %, de préférence 3 %, de préférence 2 % ou même 1 % du poids de la charge minérale selon l'invention. En particulier, la chaux éteinte contient avantageusement moins de 1,0 % en masse de Fe₂O₃, de préférence moins de 0,5 % et de préférence moins de 0,3 %, de façon à ne pas modifier significativement la couleur de la composition polymère ignifugée.

Cette chaux éteinte peut aussi contenir de l'oxyde de calcium qui n'aurait pas été hydraté au cours de la préparation de la chaux éteinte selon l'invention, tout comme elle peut contenir du carbonate de calcium CaCO₃. Ce carbonate de calcium peut provenir soit du calcaire initial dont est dérivée la chaux éteinte selon l'invention (incuits), soit d'une réaction de carbonatation partielle de la chaux éteinte au contact de l'air au cours de son procédé de préparation et notamment au cours de son séchage. La teneur en oxyde de calcium dans la chaux éteinte selon l'invention est généralement inférieure à 3 % en masse, de préférence inférieure à 2 % et de manière avantageuse inférieure à 1 %. Celle en carbonate de calcium est inférieure à 15 % en masse, de préférence inférieure à 10 % et de manière avantageuse inférieure à 6 %, de manière particulièrement avantageuse inférieure à 4%. La chaux éteinte peut contenir de l'eau libre, à savoir non liée chimiquement au composé, jusqu'à environ 50 g/kg.

D'une manière générale, la taille des particules de cette chaux éteinte sous forme pulvérulente est intégralement inférieure à 1 mm et souvent inférieure à 250 µm. En particulier, lorsque la taille des particules est mesurée par granulométrie laser (après dispersion du produit dans du méthanol sans étape de désagglomération par ultra-sons), le d₉₀, qui correspond au diamètre (en µm) pour lequel 90 % en volume des particules de la matière pulvérulente sont plus petites, est de préférence inférieur à 80 µm, avantageusement inférieur à 60 µm. De même, le d₉₇, qui correspond au diamètre (en µm) pour lequel 97 % en volume des particules de la matière pulvérulente sont plus petites, est de préférence inférieur à 200 µm, avantageusement inférieur à 100 µm. Plus les particules sont petites, mieux elles seront dispersées dans la matrice polymère.

Une chaux éteinte de surface spécifique élevée peut être obtenue suivant l'enseignement du document US 5 492 685 qui divulgue l'obtention de chaux éteintes à très haute surface spécifique >35 m²/g et pouvant aller au-delà de 75 m²/g qui sont obtenues par hydratation en présence d'alcool. D'une manière similaire, la chaux éteinte peut également être obtenue suivant l'enseignement du document US 5 173 279 par extinction de chaux vive en présence d'un glycol ou d'une amine. Ceci permet d'obtenir des chaux éteintes à surface spécifique élevée (supérieure à 25 m²/g).

En particulier, la chaux éteinte selon l'invention, en plus de la surface spécifique élevée décrite précédemment, possède un volume poreux élevé. Par 'volume poreux', on entend le volume des pores dont la taille est comprise entre 17 et 1000 Å (1,7 et 100 nm), mesuré par manométrie d'adsorption d'azote et calculé selon la méthode BJH. En particulier, le volume poreux de la chaux éteinte selon l'invention est compris entre 0,10 et 0,30 cm³/g, de préférence supérieur à 0,15 cm³/g, de manière particulièrement avantageuse supérieur à 0,20 cm³/g. Le volume poreux est en particulier inférieur à 0,25 cm³/g.

L'hydroxyde de calcium, de préférence sous forme de chaux hydratée, à surface spécifique élevée est par exemple obtenu selon l'enseignement de la demande de brevet internationale WO97/14650 par extinction en présence d'une grande quantité d'eau et par séchage ultérieur avec coupure granulométrique ou broyage.

Avantageusement, ladite charge minérale de la composition polymère ignifugée comprend en outre au moins un composé magnésien, sous forme d'un hydroxyde de magnésium, en tant qu'additif retardateur de flamme.

De cette façon, l'effet retardateur de flamme de la charge est amélioré par rapport à l'utilisation de charges minérales comprenant uniquement un composé calcique tel que décrit dans l'invention. En effet, la décomposition endothermique de Mg(OH)₂ intervient dans une gamme de températures plus basse que la décomposition de Ca(OH)₂, gamme de températures qui correspond à la gamme de températures dans laquelle la majorité des polymères se dégradent. L'effet de résistance au feu est en revanche plus ou moins diminué selon la proportion de Mg(OH)₂ dans la charge, puisque la cohésion du résidu de combustion est liée au composé calcique, à sa proportion dans la composition et à ses propriétés.

Dans une forme de réalisation particulière, le composé calcique et le composé magnésien de ladite charge minérale de la composition polymère ignifugée sont deux composés séparés en mélange.

De manière avantageuse, le composé calcique, qui se trouve sous la forme d'une chaux éteinte de haute surface spécifique, et le composé magnésien de ladite charge minérale de la composition polymère ignifugée sont intimement liés et proviennent d'une extinction de chaux vive avec une suspension d'hydroxyde de magnésium.

Dans un tel cas, l'hydroxyde de magnésium provenant de la suspension d'extinction est incorporé dans la phase solide des particules d'hydroxyde de calcium.

Ladite charge minérale dans laquelle le composé calcique est intimement lié au composé magnésien permet une homogénéité des propriétés de résistance au feu et de retard de flamme de la composition polymère ignifugée selon la présente invention.

D'ailleurs, si du MgO est encore présent à l'issue de l'extinction de chaux vive par une suspension d'hydroxyde de magnésium, il sera présent à raison de moins de 2%, dès lors qu'il s'agit alors d'une phase d'impuretés. Ladite charge minérale comprenant un composé calcique et un composé magnésien intimement liés a pour formule générale xCa(OH)₂.yMg(OH)₂.zl, où x, y et z sont des proportions massiques avec y = 0,4 à 58,0 %, la somme des x, y et z valant 100% et la somme de x et y étant supérieure ou égale à 88 %, de préférence à 90 %, plus particulièrement à 92 %, avantageusement à 95 %, en particulier à 97 % et de manière extrêmement préférentielle supérieure à 98 %. I représente les impuretés qui peuvent être présentes dans la charge minérale selon la présente invention telles que des phases dérivées de SiO₂, Al₂O, Fe₂O₃, MnO, P₂O₅, K₂O et/ou SO₃ provenant essentiellement de la chaux éteinte à hauteur de quelques dizaines de grammes par kilogramme, ou encore de l'oxyde de calcium qui n'aurait pas été hydraté au cours de la préparation de la chaux éteinte, du carbonate de calcium provenant soit du calcaire initial dont est dérivée la chaux éteinte (incuits), soit d'une réaction de carbonatation partielle de la chaux éteinte au contact de l'air ou encore de l'eau libre.

D'une manière générale, les impuretés sont présentes à une teneur inférieure ou égale à 12 %, plus particulièrement à 10%, de préférence inférieure ou égale à 8%, avantageusement inférieure ou égale à 5%, en particulier inférieure ou égale à 3% et de manière particulièrement avantageuse à hauteur de moins de 2% en poids, par rapport au poids total de la composition. La charge minérale comprenant un composé calcique et un composé magnésien, de préférence intimement liés, peut contenir de l'eau libre, à savoir non liée chimiquement au composé, jusqu'à environ 50 g/kg.

La charge minérale selon l'invention, comprenant un composé calcique et un composé magnésien, de préférence intimement liés présente une surface spécifique et un volume poreux élevés. Leur surface spécifique est supérieure à 20 m²/g, de préférence supérieure à 25 m²/g, en particulier supérieure à 30 m²/g et inférieure à 50 m²/g, en particulier inférieure à 45 m²/g, notamment inférieure à 40m²/g, voire inférieure à 35 m²/g. Leur volume poreux est supérieur à 0,10 cm³/g, de préférence supérieur à 0,11 cm³/g, avantageusement supérieur à 0,13 cm³/g et inférieur à 0,25 cm³/g, en particulier inférieur à 0,20 cm³/g, notamment inférieur à 0,18 cm³/g, voire inférieur à 0,16 cm³/g.

L'extinction d'une chaux vive avec une suspension de Mg(OH)₂ est réalisée selon un procédé inspiré du procédé décrit dans WO97/14650 (extinction en présence d'une grande quantité d'eau et séchage ultérieur avec coupure granulométrique ou broyage éventuel), mais dans lequel l'eau d'hydratation est remplacée par une suspension de Mg(OH)₂. Pendant la synthèse, le Mg(OH)₂ ne subit aucune modification. Du fait de l'excès d'eau d'hydratation utilisé, la partie calcique du produit obtenu à la fin de la synthèse se présente sous la forme d'un Ca(OH)₂, de surface spécifique et volume poreux élevés. Le produit ainsi synthétisé est donc un mélange intime entre un Mg(OH)₂ aux propriétés standards et un Ca(OH)₂ de surface spécifique et de volume poreux élevés. Le produit mixte a en conséquence une surface spécifique et un volume poreux également élevés, qui dépendent des proportions massiques de Mg(OH)₂ et de Ca(OH)₂ dans le mélange et de leurs surfaces spécifiques et volumes poreux respectifs.

A l'issue de la préparation de la charge minérale par extinction de chaux vive avec une suspension d'hydroxyde de magnésium, cette charge comprenant un composé calcique et un composé magnésien intimement liés peut être séchée et/ou désagglomérée et/ou broyée et/ou séparée pour ajuster sa granulométrie. La distribution en taille des particules de cette charge est alors comparable à celle du composé calcique sous forme de chaux éteinte à haute surface spécifique décrite ci-dessus.

Le polymère de la composition selon l'invention peut être de type thermoplastique, thermodurcissable ou élastomère, d'origine naturelle ou synthétique. Il peut être choisi par exemple parmi un polyéthylène, un polypropylène, un polystyrène, un copolymère d'éthylène et de propylène (EPR), un terpolymère-éthylène-propylènediène (EPDM), un copolymère d'éthylène et d'acétate de vinyle (EVA) à faible/moyenne teneur en acétate (<28%, de préférence <à 24%, de manière plus préférentielle <20% et encore de manière encore plus préférentielle < 14%), un copolymère d'éthylène et d'acrylate de méthyle (EMA) à faible/moyenne teneur en acrylate, un copolymère d'éthylène et d'acrylate d'éthyle (EEA) à faible teneur en acrylate, un copolymère d'éthylène et d'acrylate de butyle (EBA) à faible teneur en acrylate, un copolymère d'éthylène et d'octène, un polymère à base d'éthylène, un polymère à base de polypropylène, un polymère à base de polystyrène, un polymère halogéné, un silicone ou un quelconque mélange de ces composés.

La charge minérale selon la présente invention est incorporée dans la composition polymère ignifugée à hauteur de 1 à 80 % en poids, avantageusement de 40 à 75 % en poids, par rapport au poids total de ladite composition polymère ignifugée.

La composition polymère selon la présente invention, peut en outre présenter une résistance mécanique (élongation à la rupture...)améliorée par un traitement de surface de la charge minérale par un agent de recouvrement ou un agent de couplage. Les techniques de compatibilisation charge/polymère par un traitement de surface sont connues, notamment celles ayant recours aux acides gras et celle ayant recours aux silanes
D'autres formes de réalisation de la composition polymère ignifugée suivant l'invention sont indiquées dans les revendications annexées.

L'invention a aussi pour objet une utilisation d'une charge minérale comprenant un composé calcique sous forme d'hydroxyde de calcium présentant une surface spécifique calculée selon la méthode BET supérieure à 25 m²/g, de préférence supérieure à 30 m²/g, de manière plus préférentielle, supérieure à 35 m²/g, et de manière encore plus préférentielle supérieure à 40 m²/g, comme additif de résistance au feu pour une composition polymère ignifugée.

Plus particulièrement, dans l'utilisation selon la présente invention, ladite charge minérale comprend en outre au moins un composé magnésien, sous forme d'un hydroxyde de magnésium, en tant qu'additif retardateur de flamme pour une composition polymère ignifugée.

Dans une autre utilisation avantageuse selon la présente invention, le composé calcique et le composé magnésien de ladite charge minérale sont deux composés séparés en mélange.

Dans une variante avantageuse de l'utilisation selon l'invention, le composé calcique et le composé magnésien de ladite charge minérale sont intimement liés provenant d'une extinction de chaux vive avec une suspension d'hydroxyde de magnésium.

La charge minérale selon l'invention, comprenant un composé calcique et un composé magnésien, de préférence intimement liés présente une surface spécifique et un volume poreux élevés. Leur surface spécifique est supérieure à 20 m²/g, de préférence supérieure à 25 m²/g, en particulier supérieure à 30 m²/g et inférieure à 50 m²/g, en particulier inférieure à 45 m²/g, notamment inférieure à 40m²/g, voire inférieure à 35 m²/g. Leur volume poreux est avantageusement supérieur à 0,10 cm³/g, de préférence supérieur à 0,11 cm³/g, avantageusement supérieur à 0,13 cm³/g et inférieur à 0,25 cm³/g, en particulier inférieur à 0,20 cm³/g, notamment inférieur à 0,18 cm³/g, voire inférieur à 0,16 cm³/g. Ladite charge minérale comprenant un composé calcique et un composé magnésien intimement liés a pour formule générale xCa(OH)₂.yMg(OH)₂.zl, où x, y et z sont des proportions massiques avec y = 0,4 à 58,0 %, la somme des x, y et z valant 100% et la somme de x et y étant supérieure ou égale à 88%, en particulier à 90 %, de préférence à 92 %, avantageusement à 95 %, en particulier à 97 % et de manière extrêmement préférentielle supérieure à 98 %. I représente les impuretés qui peuvent être présentes dans la charge minérale selon la présente invention.

Dans un mode de réalisation de l'utilisation selon l'invention, ledit polymère est un polymère organique, en particulier un polymère organique de type thermoplastique, thermodurcissable ou élastomère, d'origine naturelle ou synthétique. Il peut être choisi par exemple parmi un polyéthylène, un polypropylène, un polystyrène, un copolymère d'éthylène et de propylène (EPR), un terpolymère-éthylène-propylènediène (EPDM), un copolymère d'éthylène et d'acétate de vinyle (EVA) à faible/moyenne teneur en acétate (<28%, de préférence <à 24%, de manière plus préférentielle <20% et encore de manière encore plus préférentielle < 14%), un copolymère d'éthylène et d'acrylate de méthyle (EMA) à faible/moyenne teneur en acrylate, un copolymère d'éthylène et d'acrylate d'éthyle (EEA) à faible teneur en acrylate, un copolymère d'éthylène et d'acrylate de butyle (EBA) à faible teneur en acrylate, un copolymère d'éthylène et d'octène, un polymère à base d'éthylène, un polymère à base de polypropylène, un polymère à base de polystyrène, un polymère halogéné, un silicone ou un quelconque mélange de ces composés.

Dans un mode de réalisation de l'utilisation selon l'invention, la charge minérale selon la présente invention est incorporée dans la composition polymère ignifugée à hauteur de 1 à 80 % en poids, avantageusement de 40 à 75 % en poids, par rapport au poids total de ladite composition polymère ignifugée.

Selon l'invention, les particules de la charge minérale présentent une taille de particules d₉₀ inférieur à 80 µm, de préférence inférieur à 60 µm.

Il est entendu que la charge minérale selon l'invention peut être utilisée en combinaison avec les charges retardatrices de flamme classiques du type ATH ou MDH, comme retardateur de flamme associé à une résistance au feu.

Dans une forme d'utilisation préférentielle selon l'invention, les particules de la charge minérale présentent une taille de particules d₉₇ inférieur à 200 µm, de préférence inférieur à 100 µm.

D'autres formes de réalisation de l'utilisation suivant l'invention sont indiquées dans les revendications annexées.

L'invention se rapporte enfin à un résidu de combustion d'une composition polymère ignifugée selon l'invention, caractérisée en ce que le résidu est un résidu cohésif présentant une résistance mécanique à la rupture en compression moyenne déterminée qui est supérieure à 3 kPa, de préférence supérieure à 8 kPa, de manière préférentielle supérieure à 20 kPa et de manière particulièrement avantageuse supérieure à 60 kPa.

Avantageusement, ce résidu de combustion cohésif est un résidu qui n'est traversé que par un nombre de fissures très limité, inférieur ou égal à 3, de préférence inférieur ou égal à 2, voire à 1 et de manière particulièrement préférentielle nul, après combustion selon la méthode normalisée du cône calorimètre ISO 5660-1 ou ASTM E 1354.

De préférence, la taille maximale d'un prélèvement (dont la section est assimilée à un carré) pouvant être prélevé sans être cassé dans le résidu obtenu après combustion selon la méthode normalisée du cône calorimètre ISO 5660-1 ou ASTM E 1354, et mesurant 100 mm de côté, est supérieure ou égale à 10 mm, de préférence supérieure ou égale à 30 mm, de préférence supérieure ou égale à 50 mm.

D'autres formes de réalisation du résidu de combustion suivant l'invention sont indiquées dans les revendications annexées

D'autres caractéristiques, détails et avantages de l'invention ressortiront de la description donnée ci-après, à titre non limitatif et en faisant référence aux dessins et aux exemples annexés.

Le tableau 1 regroupe les principales caractéristiques des chaux hydratées de haute surface spécifique n°1 et n°2 utilisées dans les exemples.

La notation dₓ représente un diamètre, exprimé en µm, par rapport auquel X % des particules mesurées sont plus petites.

Le tableau 2 donne les propriétés de l'ATH et du MDH qui servent de charges de référence.

Le tableau 3 regroupe les propriétés principales des charges de laboratoire de haute surface spécifique n°1 et n °2 utilisées dans les exemples.

Le tableau 4 indique les principales caractéristiques des chaux hydratées standard et de faible surface spécifique utilisées dans les exemples.

Le tableau 5 regroupe l'ensemble des valeurs servant à caractériser les résidus de combustion obtenus à l'issue du test de cône calorimétrie pour les différentes compositions testées dans les exemples.
La figure 1 est une illustration schématique du dispositif de mesure de la résistance mécanique en compression des résidus de combustion.
Les figures 2A et 2B sont des photographies du résidu de combustion de la composition polymère ignifugée selon l'exemple 1
La figure 3 est un graphique illustrant entre autres les résultats de test au feu par cône calorimétrie d'une composition polymère ignifugée selon l'exemple 1.
Les figures 4A et 4B sont des photographies du résidu de combustion de la composition polymère ignifugée selon l'exemple 2.
La figure 5 est un graphique illustrant les résultats de test au feu par cône calorimétrie d'une composition polymère ignifugée selon l'exemple 2.
Les figures 6A et 6B sont des photographies du résidu de combustion de la composition polymère ignifugée selon l'exemple 3. Pour cette même composition, les résultats de test au feu par cône calorimétrie sont illustrés sur la Figure 3.
Les figures 7A et 7B sont des photographies du résidu de combustion de la composition polymère ignifugée selon l'exemple 4. Pour cette même composition, les résultats de test au feu par cône calorimétrie sont illustrés sur la Figure 3.
Les figures 8A et 8B sont des photographies du résidu de combustion de la composition polymère ignifugée selon l'exemple 5.
La figure 9 est un graphique illustrant les résultats de test au feu par cône calorimétrie d'une composition polymère ignifugée selon les exemples 5 et 6.
Les figures 10A et 10B sont des photographies du résidu de combustion de la composition polymère ignifugée selon l'exemple 6.
Les figures 11A et 11B sont des photographies du résidu de combustion de la composition polymère ignifugée selon l'exemple 7.
La figure 12 est un graphique illustrant les résultats de test au feu par cône calorimétrie d'une composition polymère ignifugée selon l'exemple 7.
Les figures 13A et 13B sont des photographies du résidu de combustion de la composition polymère ignifugée selon l'exemple 8.
La figure 14 représente une courbe illustrant la cinétique de carbonatation d'une chaux de haute surface spécifique et de chaux standard.
Les figures 15A et 15B sont des photographies du résidu de combustion de la composition polymère ignifugée selon l'exemple comparatif 1.
Les figures 16A et 16B sont des photographies du résidu de combustion de la composition polymère ignifugée selon l'exemple comparatif 2.
Les figures 17A et 17B sont des photographies du résidu de combustion de la composition polymère ignifugée selon l'exemple comparatif 3
Les figures 18A et 18B sont des photographies du résidu de combustion de la composition polymère ignifugée selon l'exemple comparatif 4.

Sur les figures, les éléments identiques ou analogues portent les mêmes références.

La présente invention se rapporte donc à une composition polymère ignifugée et résistante au feu comprenant un polymère et une charge minérale qui comprend au moins un composé calcique sous forme d'hydroxyde de calcium dont la surface spécifique BET est supérieure à 25 m²/g, de préférence supérieure à 30 m²/g, de manière encore plus préférentielle supérieure à 35 m²g et de la manière la plus préférentielle supérieure à 40 m²/g.

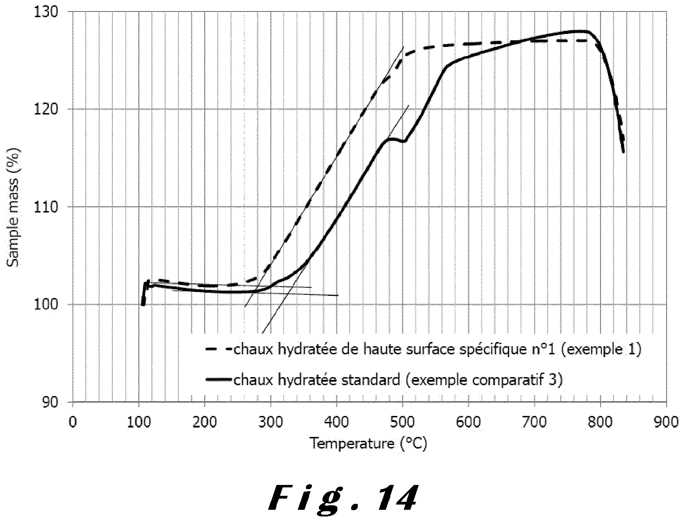

Lorsque la composition polymère chargée est montée en température, comme lors d'un incendie par exemple, différents phénomènes interviennent, indépendant ou non, à différentes température. Il y a un notamment un phénomène qui pourrait s'apparenter à de l'intumescence, puisque la composition polymère gonfle et devient poreuse. Il y a également le phénomène de carbonatation de la charge minérale à base de Ca(OH)₂, phénomène plus rapide et favorisé lorsque la surface spécifique de la charge minérale à base de Ca(OH)₂ est élevée (comme illustré à la figure 14) et qui conduit, à l'issue de la combustion, à un résidu cohésif et présentant une certaine dureté / résistance en compression.

La figure 14, comme mentionné précédement, illustre une courbe de la cinétique de recarbonatation d'une chaux de haute surface spécifique et d'une chaux standard. La figure 14 montre que la recarbonatation d'une chaux de haute surface spécifique est plus rapide que celle d'une chaux standard. Cette mesure a été réalisée en suivant la masse d'un échantillon de chaux hydratée standard ou de haute surface spécifique pendant une montée en température de la température ambiante à 950 °C à 20 ° C/min sous une atmosphère N₂/CO₂ contenant environ 18 % en volume de CO₂ (débit de N₂ : 112 ml/min, débit de CO₂ : 24 ml/min). Cette mesure a été réalisée sur un appareil de thermogravimétrie Netzsch STA 449F3

Ces deux phénomènes, à savoir le phénomène qui pourrait s'apparenter à de l'intumescence et le phénomène de recarbonatation sont avantageux dans le but d'améliorer le comportement au feu des polymères, dans le sens où le phénomène d'intumescence, qui limite les transferts de chaleur et la diffusion des gaz combustibles et de l'oxygène, ralentit la combustion du polymère (flame retardant), alors que le phénomène de carbonatation de la charge conduit à un résidu cohésif (fire resistant).

Néanmoins, un compromis entre ces deux phénomènes doit généralement être trouvé afin d'optimiser les propriétés des compositions polymères. En effet, si le phénomène d'intumescence est trop important ou trop rapide, le résidu de combustion est très poreux et la taille de ses pores est grande, ce qui conduit à une mauvaise cohésion et à une faible résistance en compression.

Les phénomènes d'intumescence étant liés à des interactions entre les charges minérales et les matrices polymères, ils sont plus ou moins marqués dans différentes matrices polymères ou en présence de différentes charges.

La charge minérale selon la présente invention peut également comprendre un composé magnésien. Ce composé magnésien peut être ajouté en mélange ou être intimement lié au composé calcique en réalisant une extinction de chaux vive avec une suspension d'hydroxyde de magnésium.

Lorsque ces charges minérales sont incorporées à des polymères, par exemple à hauteur de 1 à 80 % en poids par rapport au poids total de la composition, on obtient un effet retardateur de flamme de la charge amélioré par rapport à l'utilisation de charges minérales comprenant uniquement un composé calcique tel que décrit dans l'invention, l'effet de résistance au feu étant en revanche plus ou moins diminué selon la proportion de Mg(OH)₂ dans la charge, puisque la cohésion du résidu de combustion est liée au composé calcique, à sa proportion dans la composition et à ses propriétés.

Lorsque le composé magnésien est présent, la surface spécifique de la charge minérale diminue légèrement mais sera dans tous les cas supérieure à 20 m²/g.

Ces compositions polymères ignifugées présentent la caractéristique extrêmement avantageuse de fournir à l'issue de la combustion un résidu cohésif qui, en plus d'un effet retardateur de flamme (« flame retardant » en anglais) confère à la charge un effet de résistance au feu (« fire résistant » en anglais) parfois appelé également effet « céramisant ».

Aucun test standard n'est disponible à l'heure actuelle pour la mesure de la cohésion des résidus de combustion de compositions polymères. Dans un premier temps, la cohésion du résidu peut être évaluée qualitativement par une simple observation du résidu obtenu à l'issue du test de cône calorimétrie. Lors de cette observation, quelques données quantitatives peuvent toutefois être estimées : i) un nombre de fissures traversant le résidu (fissures transverses) ; ii) la profondeur de ces fissures (c'est-à-dire si les fissures sont seulement présentes à la surface ou si elles traversent toute l'épaisseur du résidu de combustion) ; iii) la cohésion peut également être représentée par la taille maximale de l'échantillon (échantillon faisant toute l'épaisseur du résidu et dont la section est assimilée à un carré) qui peut être prélevé sans être cassé dans le résidu obtenu à l'issue du test de cône calorimétrie (qui présente une section carrée de 100 mm de côté).

Au sens de l'invention, on appelle « fissure transverse » une fissure qui traverse de part en part le résidu de combustion obtenu à l'issue du test de cône calorimétrie et qui se présente sous la forme d'un échantillon de section carrée de 100 mm de côté. Pour garantir la cohésion du résidu, en plus d'être présentes en nombre limité, ces fissures transverses doivent être peu profondes, c'est-à-dire qu'elles ne doivent pas être présentes sur toute l'épaisseur du résidu. Tout résidu comprenant 1 à 10 fissure(s) profonde(s) est considéré comme moyennement cohésif. Tout résidu comprenant plus de 10 fissures profondes est considéré comme n'étant pas cohésif.

En considérant maintenant la taille maximale de l'échantillon (côté de échantillon faisant toute l'épaisseur du résidu et dont la section est assimilée à un carré) qui peut être prélevé sans être cassé dans le résidu obtenu à l'issue du test de cône calorimétrie (qui présente lui-même une section carrée de 100 mm de côté), le résidu est dit cohésif si cette taille est supérieure ou égale à 10 mm, de préférence supérieure ou égale à 30 mm, de préférence supérieure ou égale à 50 mm.

Par ailleurs, une méthode quantitative a été développée dans le cadre de cette invention afin de déterminer la résistance mécanique des résidus de combustion. Cette méthode n'est applicable que pour les résidus de combustion dans lesquels il est possible de prélever un échantillon dont la section s'apparente à un carré d'au moins 10 mm de côté, c'est-à-dire dont la section est au moins aussi grande que la surface du plateau mobile utilisé pour cette mesure.

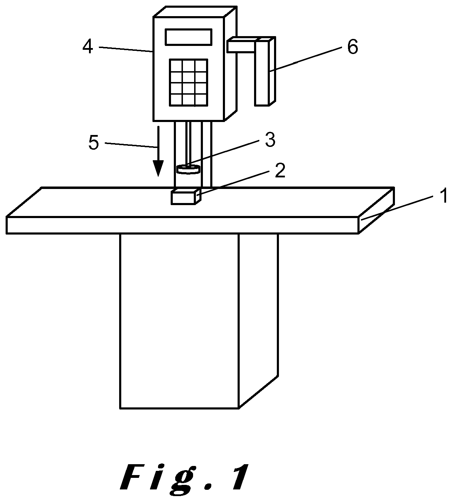

Elle consiste à réaliser une mesure de résistance à la compression à l'aide d'un texturomètre Chatillon (modèle DFGS50) sur trois prélèvements d'un résidu de combustion. Ces trois prélèvements sont effectués à des endroits différents dans le résidu de section carrée mesurant 100 mm de côté obtenu à l'issue des mesures de cône calorimétrie. Le principe de cette méthode est illustré sur la Figure 1. Chaque prélèvement 2 est placé au centre d'un plateau métallique rectangulaire fixe 1 mesurant environ 100 x 200 mm. Manuellement, un second plateau métallique 3, beaucoup plus petit cette fois et circulaire (de diamètre 12 mm), est amené au moyen d'un levier 6 permettant de faire descendre manuellement le plateau mobile, au contact de l'échantillon 2. Ce second plateau 3 étant relié à une jauge de force 4, la force appliquée sur l'échantillon par le plateau mobile au moment de la rupture totale de l'échantillon peut être déterminée et est indiquée par une flèche 5. La valeur utile est la moyenne des forces de rupture mesurées pour les trois prélèvements d'un résidu de combustion. La force mesurée est exprimée en Newton (N), mais peut être normalisée par la surface du plateau mobile circulaire afin de déterminer la résistance mécanique en compression du résidu en Pascal (Pa). Bien entendu, les prélèvements utilisés pour cette mesure doivent avoir une section au moins aussi grande que la surface du plateau mobile circulaire, de sorte que la force soit appliquée sur toute la surface de ce plateau.

Cette méthode ne permet pas la détermination d'un critère unique et son résultat dépend d'effets antagonistes. En effet, plus le résidu est poreux, suite par exemple à des phénomènes assimilés à de l'intumescence, plus sa résistance en compression sera faible, bien que sa cohésion puisse être très bonne. A l'inverse, un résidu peu poreux peut présenter une mauvaise cohésion et un taux de fissuration élevé alors que chaque prélèvement de ce résidu peut avoir une résistance élevée.

### EXEMPLES.-

### Exemple 1.- Utilisation en tant que charge retardatrice de flamme d'une chaux hydratée de haute surface spécifique n°1 dans une composition polymère de MDPE

Une chaux hydratée de haute surface spécifique n°1 a été obtenue industriellement par calcination d'un calcaire naturel, puis hydratation (extinction) avec un excès d'eau, dans un hydrateur industriel, de la chaux vive obtenue après calcination. La chaux éteinte produite a ainsi une humidité de 15-30 % en masse à la sortie de l'hydrateur. Elle est ensuite séchée, désagglomérée et puis soumise à une étape industrielle de séparation granulométrique permettant de retirer les particules les plus grossières. A l'issue de ce procédé de fabrication industriel, la chaux éteinte est une nouvelle fois séparée par différentes étapes de séparation à l'air, à l'échelle du laboratoire cette fois, afin d'obtenir un grade granulométrique fin. Les propriétés de cette chaux hydratée de haute surface spécifique n°1 sont regroupées dans le Tableau 1.

Cette charge est incorporée à hauteur de 50 % en masse dans une matrice de polyéthylène de moyenne densité (MDPE 3802, grade pour câble produit par Total) en utilisant un mélangeur de type Brabender. Des plaques, préparées avec une presse hydraulique, mesurant 100 x 100 x 4 mm³ ont été ensuite soumises au test au feu par cône calorimétrie. Les résidus obtenus à l'issue du test au cône calorimètre (résidus de combustion) sont dans un premier temps observés et photographiés afin d'estimer leur degré de cohésion, puis leur résistance mécanique en compression est caractérisée en suivant la méthode décrite précédemment dans le texte.

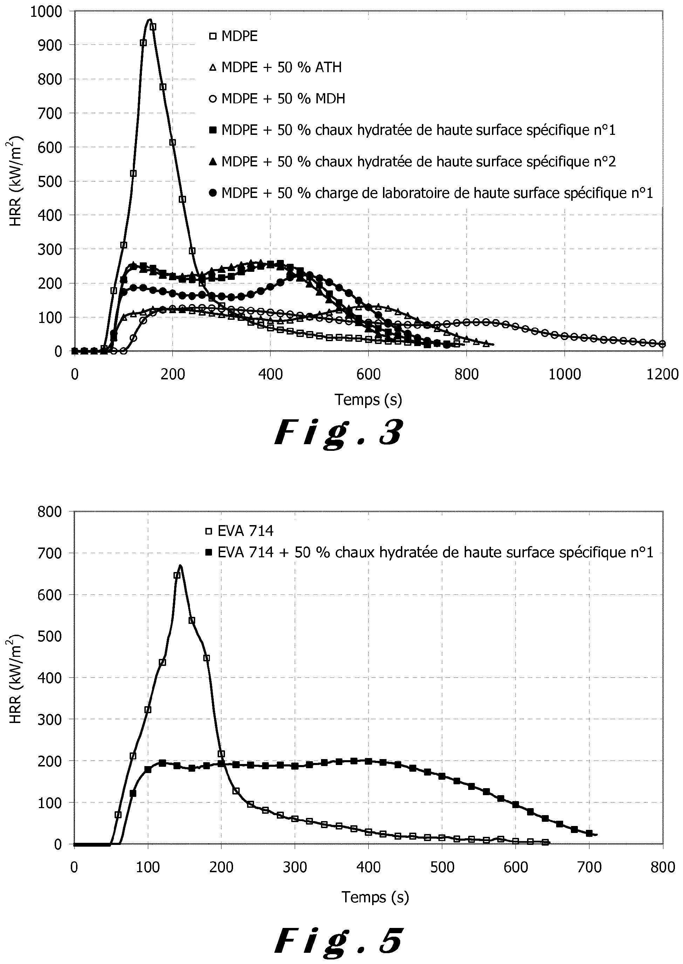

Les résultats des tests au feu par cône calorimétrie sont représentés à la Figure 3. Ils sont comparés à ceux obtenus pour le polymère hôte non chargé (MDPE) et pour le même polymère, chargé dans les mêmes conditions et avec les mêmes proportions d'ATH (Albemarle Martinal OL 107 LEO, décrit dans le Tableau 2) et de MDH (Albemarle Magnifin H10, décrit dans le Tableau 2).

Les tests de cône calorimétrie réalisés pour cette composition indiquent que si la chaux hydratée de haute surface spécifique n°1 est un retardateur de flamme moins efficace dans le MDPE que l'ATH ou le MDH généralement utilisés, principalement du fait de la plus haute température de décomposition de Ca(OH)₂ en comparaison avec Al(OH)₃ et Mg(OH)₂, son rôle retardateur de flamme est tout de même évident lorsque la courbe de la composition de cet exemple est comparée à la courbe du MDPE non chargé.

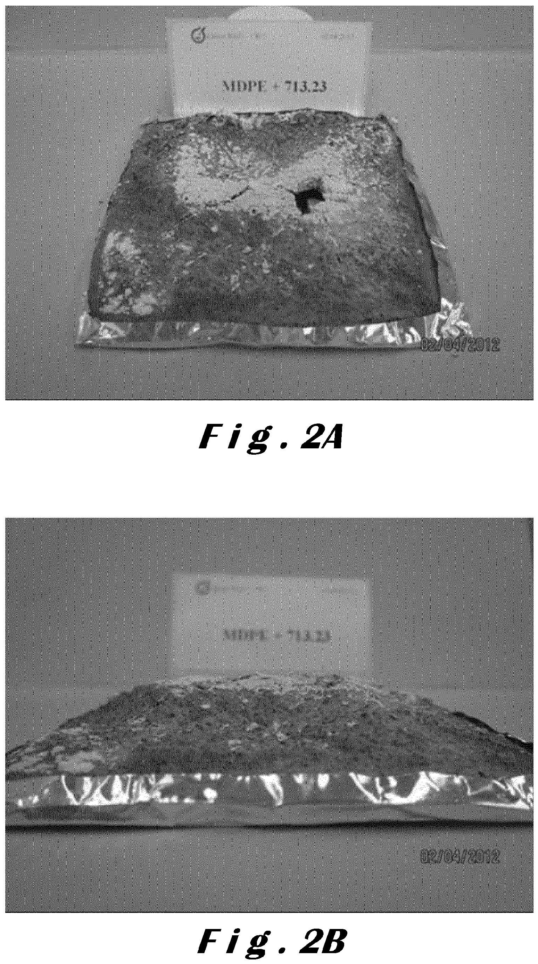

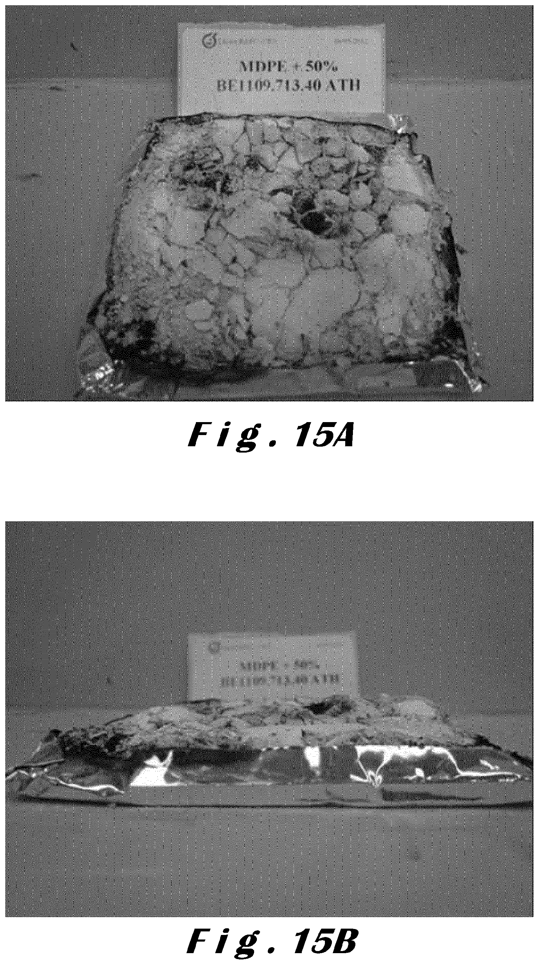

L'observation des résidus de combustion montrés aux figures 2A et 2B et caractérisés au tableau 5 permet de conclure qu'à l'issue de sa combustion, la composition de cet exemple a mené à la formation d'un résidu cohésif : ce résidu est composé d'une couche unique non fissurée et non pas d'une poudre, d'une cendre ou de tout autre matériau divisé. Ce résidu a donc un aspect totalement différent de celui des résidus obtenus pour les compositions à base d'ATH ou de MDH qui se présentent sous la forme de poudre ou de cendre (Figures 15A et 15B dans le cas de l'ATH et 16A et 16B dans le cas du MDH). La couche du résidu de cet exemple est 'gonflée' et creuse (Figure 2A). La mesure de la résistance mécanique en compression du résidu conduit à une valeur moyenne (sur 3 mesures réalisées avec l'équipement présenté sur la Figure 1 sur des prélèvements effectués à différents endroits dans le résidu de combustion) de 110 kPa, les trois valeurs mesurées étant 71 kPa, 120 kPa et 140 kPa (Tableau 5).

### Exemple 2.- Utilisation en tant que charge retardatrice de flamme d'une chaux hydratée de haute surface spécifique n°1 dans une composition de co-polymère d'éthylène et d'acétate de vinyle

La charge minérale de l'exemple 2 est la même que celle utilisée à l'exemple 1, mais la matrice polymère est différente en ce que le MDPE est remplacé par un co-polymère d'éthylène et d'acétate de vinyle contenant 14 % d'acétate de vinyle (EVA 714, Escorene Ultra FL00014, produit par ExxonMobil Chemical).

Les résultats des tests au feu par cône calorimétrie enregistrés pour cette composition sont représentés à la Figure 5. Ils y sont comparés aux résultats obtenus pour le polymère hôte non chargé (EVA 714) et indiquent à nouveau un net effet retardateur de flamme de la chaux hydratée de haute surface spécifique n°1.

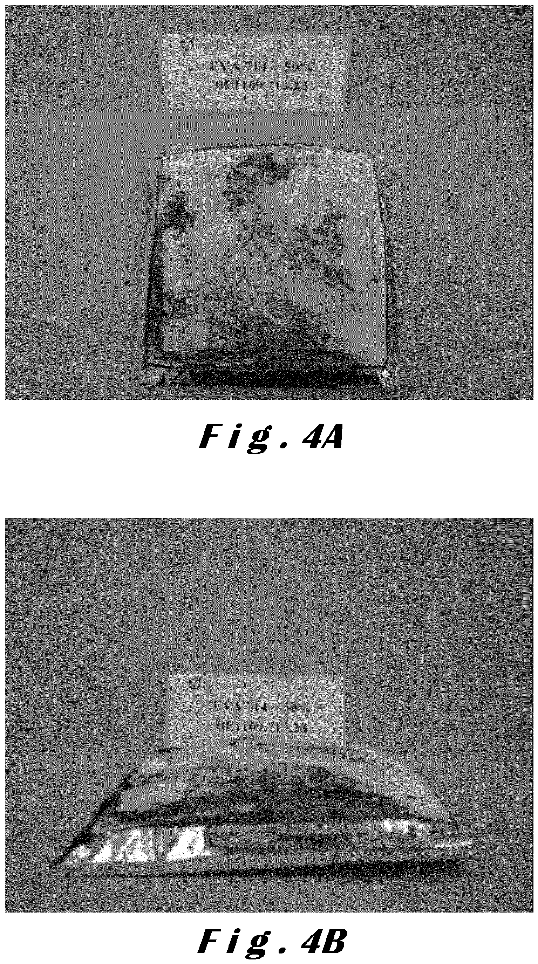

Les résidus obtenus à l'issue du test au cône calorimètre (résidus de combustion), ont été caractérisés de la même manière que dans l'exemple 1. L'observation de ces résidus montrés aux Figures 4A et 4B et caractérisés au Tableau 5 permet de conclure qu'à l'issue de sa combustion, la composition de cet exemple a mené à la formation d'un résidu cohésif : ce résidu est composé d'une couche unique non fissurée dont la surface est lisse et nette et non pas d'une poudre ou d'un matériau divisé. La mesure de la résistance mécanique du résidu conduit à une valeur moyenne (sur 3 mesures réalisées sur des prélèvements effectués à différents endroits dans le résidu de combustion) de 65 kPa, les trois valeurs mesurées étant 43 kPa, 59 kPa et 91 kPa.

### Exemple 3.- Utilisation en tant que charge retardatrice de flamme d'une chaux hydratée de haute surface spécifique n°2 dans une composition polymère de MDPE

La chaux hydratée utilisée dans l'exemple 1 est remplacée par une chaux hydratée de haute surface spécifique n°2, obtenue industriellement, dans les mêmes conditions que la chaux hydratée n°1, mais à partir d'une pierre calcaire différente. Les propriétés de la chaux hydratée de haute surface spécifique n°2 sont regroupées dans le Tableau 1.

A la sortie de l'hydrateur, la chaux hydratée de haute surface spécifique n°2 est séchée, désagglomérée et séparée grossièrement industriellement. Contrairement à la chaux hydratée de haute surface spécifique n°1, aucune étape de séparation granulométrique additionnelle n'est réalisée pour cette chaux hydratée de haute surface spécifique n°2 postérieurement aux étapes industrielles de séparation. Le contrôle granulométrique est de ce fait beaucoup moins poussé que dans l'exemple 1, expliquant la granulométrie plus grossière de la chaux hydratée de haute surface spécifique n°2.

Si la chaux hydratée de haute surface spécifique n°2 conserve une surface spécifique élevée en comparaison des chaux hydratées standards, elle est en revanche sensiblement plus faible que celle de la chaux hydratée n°1, probablement du fait d'une carbonatation plus importante lors des étapes de séchage, désagglomération, séparation et manutention, ainsi que d'une présence plus importante d'impuretés (impuretés chimiques, incuits...) liés à une séparation granulométrique nettement moins fine que dans le cas de la chaux de haute surface spécifique n° 1 de l'exemple 1.

Des échantillons de la composition contenant 50 % en poids de la chaux hydratée de haute surface spécifique n°2 et le reste de MDPE ont été préparés et caractérisés (test au feu) de la même manière que dans l'exemple 1. A nouveau, les résidus de combustion obtenus après le test au cône calorimètre des échantillons de la composition de cet exemple ont été caractérisés.

Les résultats enregistrés lors des mesures au cône calorimètre sont comparés à ceux obtenus pour le polymère hôte non chargé (MDPE) et pour la composition de l'exemple 1 sur la Figure 3.

Les différences entre les chaux hydratées de haute surface spécifique n°1 et n°2, mentionnées ci-dessus, sontsans effet sur les résultats des tests au cône calorimètre caractérisant le rôle retardateur de flamme des charges minérales. Les courbes correspondant aux compositions à base de ces deux chaux hydratées sont tout à fait similaires.

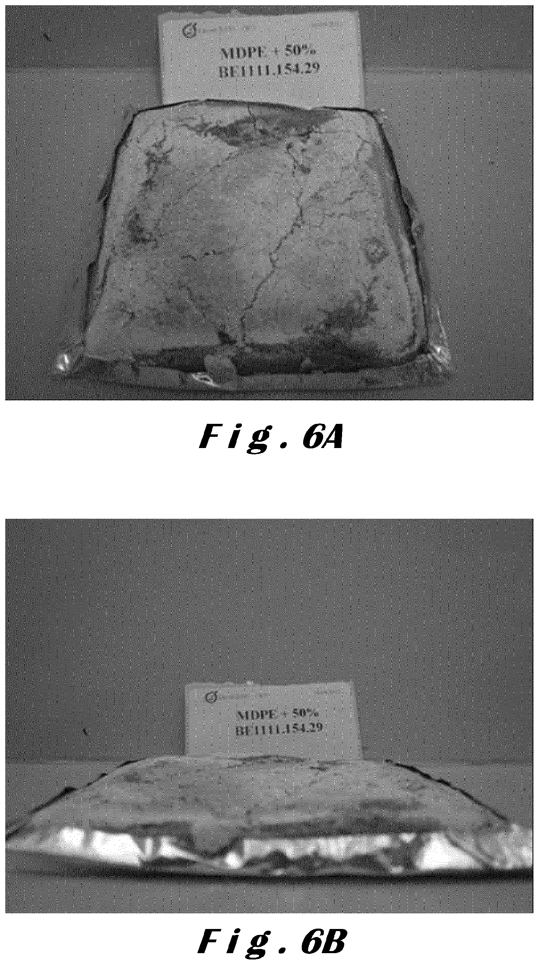

L'observation des résidus de combustion montrés aux figures 6A et 6B et caractérisés au Tableau 5 permet de conclure qu'à l'issue de sa combustion, la composition de cet exemple a mené à la formation d'un résidu cohésif : ce résidu est composé d'une couche relativement cohésive en comparaison des résidus obtenus pour les compositions à base d'ATH ou de MDH dont les résidus s'apparentent à une poudre ou à une cendre (Figures 15A et 15B dans le cas de l'ATH et 16A et 16B dans le cas du MDH), même si cette couche est fissurée à plusieurs endroits. Le résidu comprend 2 fissures transverses et ces fissures sont des fissures peu profondes qui ne traversent pas l'épaisseur du résidu. Malgré cette fissuration, un échantillon de section apparentée à un carré de 30 mm de côté environ peut être prélevé sur toute l'épaisseur de ce résidu. Par ailleurs, la mesure de la résistance mécanique du résidu conduit à une valeur moyenne (sur 3 mesures réalisées sur des prélèvements effectués à différents endroits dans le résidu de combustion) de 20 kPa, les trois valeurs mesurées étant 14 kPa, 16 kPa et 31 kPa. La résistance mécanique de ce résidu est plus faible que celle du résidu de combustion de l'exemple 1, peut-être du fait d'une moins bonne répartition de la charge dans la matrice polymère, qui pourrait être liée à la granulométrie nettement plus grossière de la chaux hydratée n°2 en comparaison de celle de la chaux hydratée n° 1 (Tableau 1).

### Exemple 4.- Utilisation en tant que charge retardatrice de flamme d'une charge minérale composée de Ca(OH)₂ et de Mg(OH)₂ intimement liés dans une composition polymère de MDPE.

Dans cet exemple, la matrice polymère est le MDPE comme cela était déjà le cas dans les exemples 1 et 3. En revanche, contrairement aux exemples précédents, la charge minérale a été synthétisée en laboratoire. La synthèse est réalisée dans un hydrateur pilote, dans lequel de la chaux vive est hydratée en présence de Mg(OH)₂ d'origine commerciale se présentant sous la forme d'une suspension aqueuse, ou suspension, contenant 53 % en masse de Mg(OH)₂. Les débits de chaux vive et de suspension de Mg(OH)₂ sont calculés de manière à obtenir, en sortie de l'hydrateur, un produit contenant environ 13 % en masse de Mg(OH)₂ et le reste de chaux hydratée (Ca(OH)₂) d'impuretés et d'incuits. La suspension de Mg(OH)₂ est dilué, l'eau apportée par la suspension dans l'hydrateur étant ajustée de manière à avoir pendant la réaction d'hydratation une humidité du produit à la sortie de l'hydrateur de l'ordre de 16 à 22 %. L'hydratation se fait en continu. Dès sa sortie de l'hydrateur, le produit est séché et désaggloméré. Il passe ensuite par les mêmes étapes de séparation granulométrique que celles subies par la chaux hydratée de haute surface spécifique n°1 présentée dans l'exemple 1, afin d'obtenir un grade granulométrique fin adapté à la préparation de compositions telles que décrites dans l'invention.

Pendant la synthèse, le Mg(OH)₂ ne subit aucune modification. Du fait de l'humidité élevée du produit en sortie de l'hydrateur (excès de l'eau d'hydratation), la partie calcique du produit obtenu à la fin de la synthèse se présente sous la forme d'un Ca(OH)₂, donc d'une chaux hydratée, de surface spécifique et volume poreux élevés. Le produit ainsi synthétisé est donc un mélange intime entre un Mg(OH)₂ aux propriétés standards et un Ca(OH)₂ de surface spécifique et de volume poreux élevés. Le produit mixte a en conséquence une surface spécifique et un volume poreux également élevés, qui dépendent des proportions massiques de Mg(OH)₂ et de Ca(OH)₂ dans le mélange et de leurs surfaces spécifiques et volumes poreux respectifs. Les propriétés de ce produit mixte, appelé par la suite charge de laboratoire de haute surface spécifique n°1, sont regroupées dansle Tableau 3.

De la même manière que dans les exemples 1 et 3, cette charge est incorporée dans le MDPE à hauteur de 50 % en poids et les compositions ainsi préparées sont caractérisées, tout comme les résidus de combustion.

Les résultats des tests au feu par cône calorimétrie sont représentés à la Figure 3. Les résultats enregistrés pour la composition de cet exemple sont comparés à ceux obtenus pour le polymère hôte non chargé (MDPE) et pour le même polymère, chargé dans les mêmes conditions et avec les chaux hydratées n°1 et n°2 décrites dans le Tableau 1.

Une fois encore, le test du cône calorimètre indique que cette charge a un très bon effet retardateur de flamme sur le MDPE. Cet effet est meilleur que celui des chaux hydratées de haute surface spécifique n°1 et n°2 et se rapproche de l'effet du MDH, du fait de la présence dans la charge de cet exemple à la fois d'un Ca(OH)₂ de haute surface spécifique et d'un hydroxyde de magnésium.

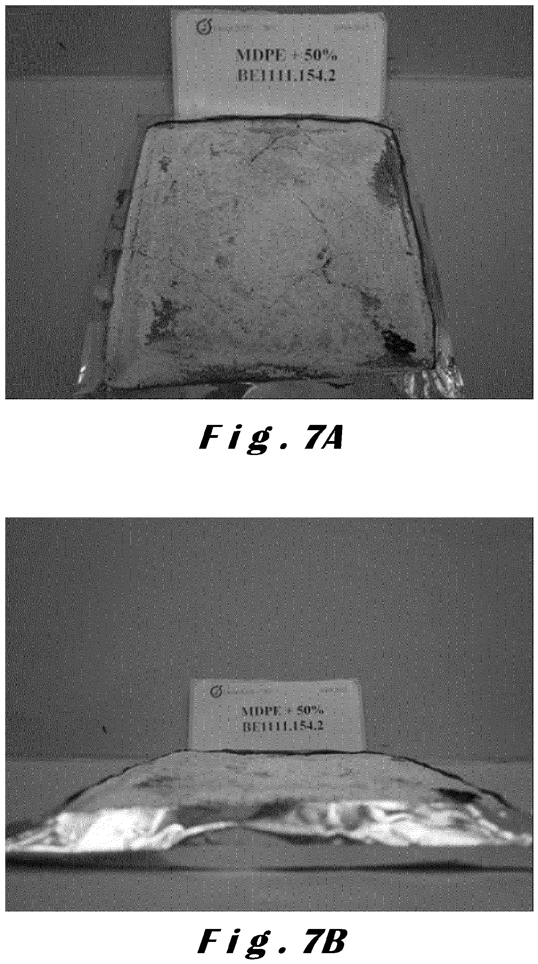

L'observation des résidus de combustion montrés aux Figures 7A et 7B et caractérisés au Tableau 5 permet de dire qu'à l'issue de sa combustion, la composition de cet exemple a mené à la formation d'un résidu cohésif en comparaison des résidus obtenus pour les compositions à base d'ATH ou de MDH dont les résidus s'apparentent à une poudre ou à une cendre (Figures 15A et 15B dans le cas de l'ATH et 16A et 16B dans le cas du MDH). Si le résidu de la composition de cet exemple comprend quelques fissures, ces fissures ne sont en revanche pas transverses et sont peu profondes. Malgré cette fissuration de surface, un échantillon de section apparentée à un carré de 30 mm de côté environ peut être prélevé sur toute l'épaisseur de ce résidu. Par ailleurs, la mesure de la résistance mécanique du résidu conduit à une valeur moyenne (sur 3 mesures réalisées sur des prélèvements effectués à différents endroits dans le résidu de combustion) de 38 kPa, les trois valeurs mesurées étant 28 kPa, 42 kPa et 43 kPa.

### Exemple 5.- Utilisation en tant que charge retardatrice de flamme d'une charge minérale composée de Ca(OH)₂ et d'ATH en mélange dans une composition polymère de MDPE.

La composition de cet exemple est une composition à base de MDPE dans laquelle la charge minérale est un mélange de deux poudres. Comme dans les exemples 1, 3 et 4, la charge minérale est incorporée à hauteur de 50 % du poids total de la composition, mais cette charge est un mélange de 30 % en poids d'ATH (Albemarle Martinal OL 107 LEO décrit dans le Tableau 2) et de 20 % en poids de chaux hydratée de haute surface spécifique n°1 telle qu'utilisée dans les exemples 1 et 2 ci-dessus et dont les propriétés sont reprises dans le Tableau 1, ces pourcentages étant exprimés par rapport au poids total de la composition. Le mélange de ces deux poudres est réalisé manuellement, avant introduction dans le doseur gravimétrique qui permet de contrôler le taux de charge minérale dans la composition au moment de la préparation de la composition.

Comme dans les exemples 1, 3 et 4, ce mélange de charges est incorporé dans le MDPE et les compositions ainsi préparées sont caractérisées, tout comme les résidus de combustion.

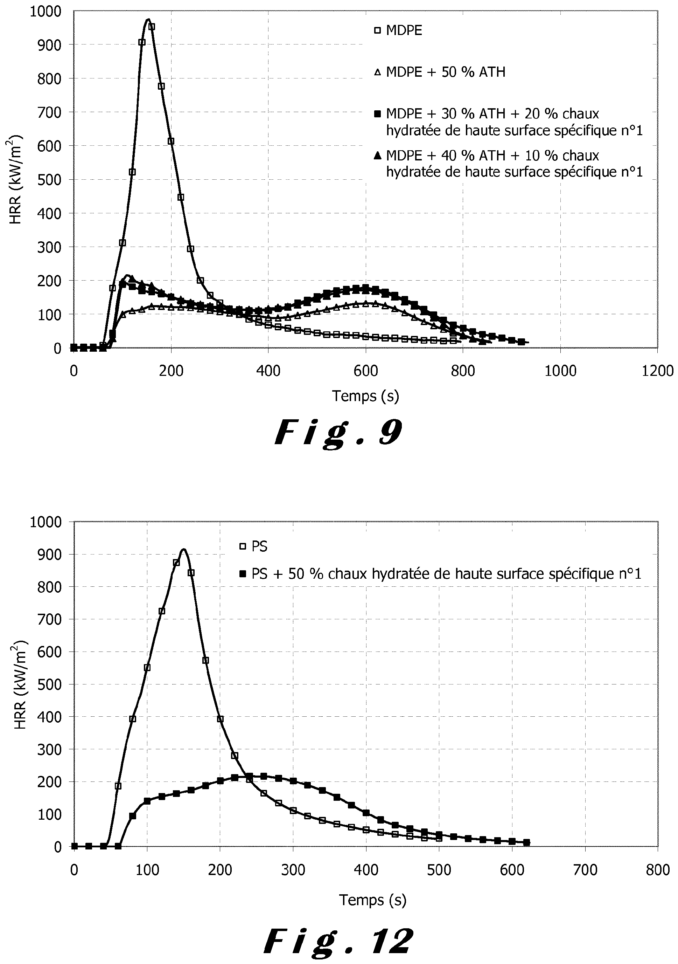

Les résultats sont comparés à ceux obtenus pour le polymère hôte non chargé (MDPE) et pour le même polymère, chargé dans les mêmes conditions et avec 50 % d'ATH. Les résultats des tests au feu par cône calorimétrie sont représentés à la Figure 9.

Les résultats obtenus au cône calorimètre pour cette composition indiquent que le mélange 30 % ATH + 20 % de chaux hydratée de haute surface spécifique n°1 est un retardateur de flamme quasiment aussi efficace que l'ATH seul. La courbe de HRR en fonction du temps est légèrement décalée vers des valeurs plus élevées en comparaison de la composition à base d'ATH seul, mais l'allure générale des courbes est comparable.

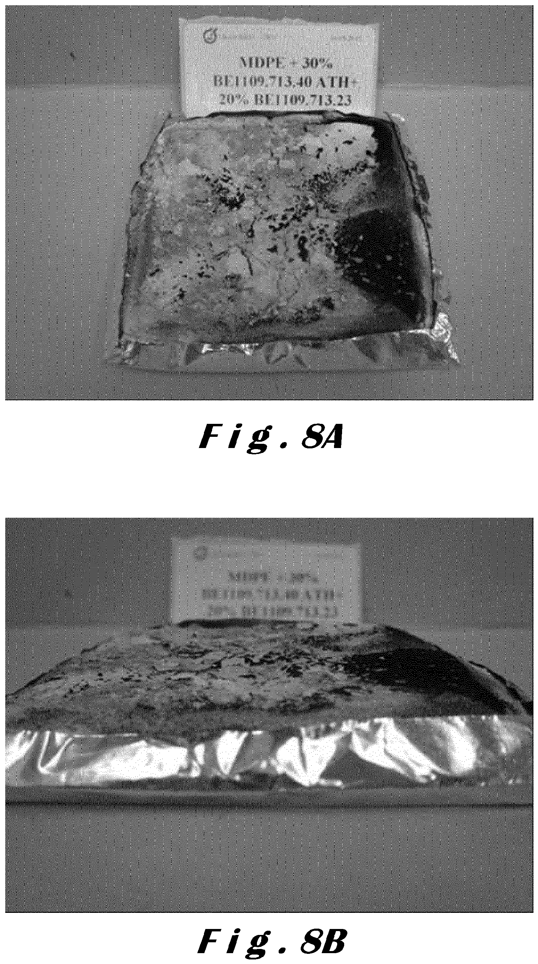

L'observation des résidus de combustion montrés aux Figures 8A et 8B et caractérisés au Tableau 5 permet de conclure qu'à l'issue de sa combustion, la composition de cet exemple a mené à la formation d'un résidu cohésif : ce résidu est noir et recouvert d'une pellicule blanche (CaCO₃ très probablement), il est composé d'une couche unique non fissurée et non pas d'une poudre, d'une cendre ou de tout autre matériau divisé. Ce résidu a donc un aspect totalement différent de celui des résidus obtenus pour les compositions à base d'ATH seul qui se présentent sous la forme d'un matériau divisé en une multitude de petits morceaux (Figures 15A et 15B). La mesure de la résistance mécanique du résidu conduit à une valeur moyenne (sur 3 mesures réalisées sur des prélèvements effectués à différents endroits dans le résidu de combustion) de 10 kPa, les trois valeurs mesurées étant 4 kPa, 7 kPa et 19 kPa.

### Exemple 6.- Utilisation en tant que charge retardatrice de flamme d'une charge minérale composée de Ca(OH)₂ et d'ATH en mélange dans une composition polymère de MDPE.

Cet exemple est similaire à l'exemple 5 ci-dessus, la charge minérale incorporée dans le MDPE étant toujours un mélange d'ATH et de chaux hydratée n°1. Néanmoins, les proportions d'ATH et de chaux hydratée de haute surface spécifique n°1 sont différentes puisque cette fois la composition contient 40 % en poids d'ATH et seulement 10 % en poids de chaux hydratée de haute surface spécifique n°1, les pourcentages étant toujours exprimés par rapport au poids total de la composition.

Comme dans l'exemple 5, ce mélange de charges est incorporé dans le MDPE et les compositions ainsi préparées sont caractérisées, tout comme les résidus de combustion.

La Figure 9 montre que cette composition a un effet retardateur de flamme similaire à la composition de l'exemple 5, comportement nettement amélioré en comparaison du polymère non chargé et quasiment comparable à celui des compositions contenant comme charge retardatrice de flamme de l'ATH uniquement.

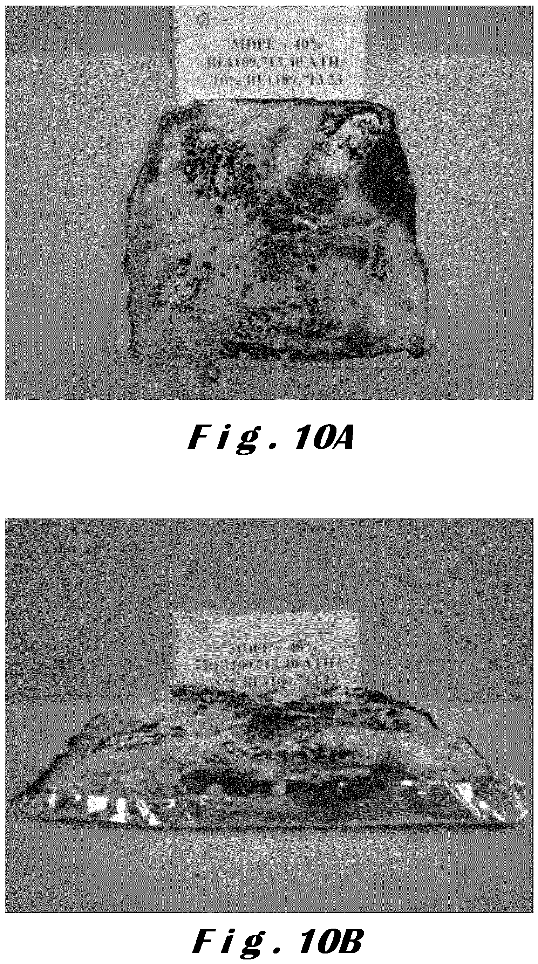

L'observation des résidus de combustion montrés Figures 10A et 10B et caractérisés au Tableau 5 permet de conclure qu'à l'issue de sa combustion, la composition de cet exemple a mené à la formation d'un résidu cohésif très comparable au résidu obtenu avec la composition de l'exemple 5. La mesure de la résistance mécanique du résidu conduit à une valeur moyenne (sur 3 mesures réalisées sur des prélèvements effectués à différents endroits dans le résidu de combustion) de 4 kPa, les trois valeurs mesurées étant 3 kPa, 4 kPa et 4 kPa. La présence d'une quantité plus faible de chaux hydratée de haute surface spécifique dans cet exemple en comparaison de l'exemple 5 pourrait expliquer la diminution de la résistance mécanique du résidu de combustion par rapport à la résistance mécanique du résidu de l'exemple 5.

### Exemple 7.- Utilisation en tant que charge retardatrice de flamme d'une chaux hydratée de haute surface spécifique n°1 dans une composition polymère de polystyrène.

L'exemple 7 est similaire aux exemples 1 et 2 mais la matrice polymère est différente en ce que le MDPE est remplacé par du polystyrène (PS, Polystyrol VPT0013 GR2).

Les résultats des tests au feu par cône calorimétrie enregistrés pour cette composition sont représentés à la Figure 12. Ils y sont comparés aux résultats obtenus pour le polymère hôte non chargé (PS) et indiquent, une fois de plus, un effet retardateur de flamme très important de la chaux hydratée de haute surface spécifique n°1. Les résidus obtenus à l'issue du test au cône calorimètre (résidus de combustion), ont été caractérisés de la même manière que dans l'exemple 1.

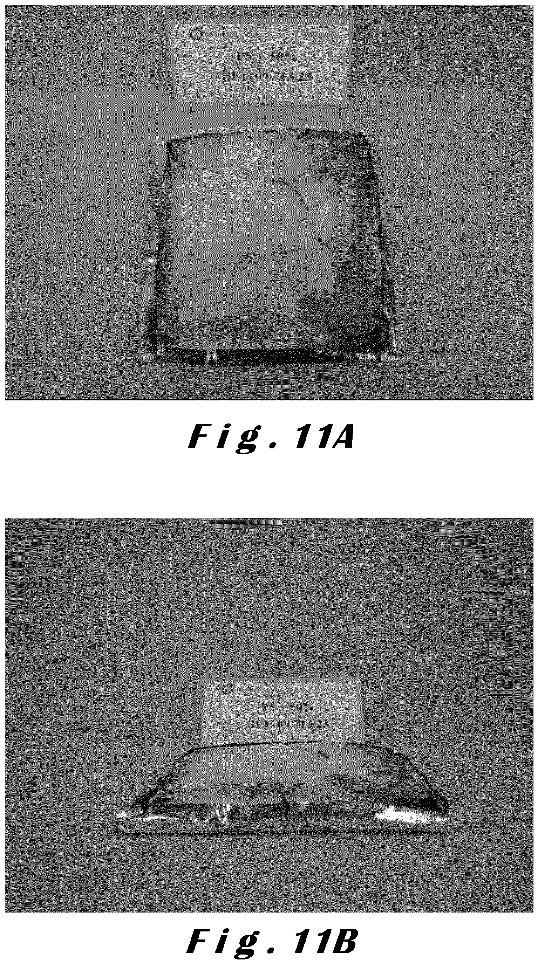

L'observation des résidus de combustion montrés aux Figures 11A et 11B et caractérisés au Tableau 5 permet de dire qu'à l'issue de sa combustion, la composition de cet exemple a mené à la formation d'un résidu moyennement cohésif : ce résidu est composé d'une couche unique et non pas d'une poudre ou d'un matériau divisé, même si cette couche est fissurée à plusieurs endroits. Le résidu comprend 2 fissures transverses mais qui sont des fissures de surface qui ne traversent pas l'épaisseur du résidu. Malgré cette fissuration, un échantillon de section apparentée à un carré de 20 mm de côté environ peut être prélevé sur toute l'épaisseur de ce résidu. Par ailleurs, la mesure de la résistance mécanique du résidu conduit à une valeur moyenne (sur 3 mesures réalisées sur des prélèvements effectués à différents endroits dans le résidu de combustion) de 124 kPa, les trois valeurs mesurées étant 109 kPa, 128 kPa et 134 kPa. Si la cohésion du résidu de combustion est moins bonne pour cette composition que pour les compositions des exemples 1 et 2 ci-dessus composées de la même charge minérale mais d'autres matrices polymères, la résistance mécanique du résidu est en revanche très bonne pour la composition de cet exemple.

### Exemple 8.- Utilisation en tant que charge retardatrice de flamme d'une chaux hydratée de haute surface spécifique traitée en surface avec du stéarate de calcium dans une composition polymère de MDPE

La charge retardatrice de flamme utilisée dans la composition de cet exemple est obtenue en traitant en surface avec du stéarate de calcium une chaux hydratée de haute surface spécifique. Pour cela, une chaux hydratée de haute surface spécifique tout à fait comparable à celle utilisée dans l'exemple 1 est choisie, puis 2 kg de cette chaux sont placés dans un mélangeur horizontal à socs de marque Lôdige d'une capacité totale de 20 dm³ (modèle M20), préalablement chauffé à 60 °C. Du stéarate de calcium est ensuite ajouté dans ce mélangeur à hauteur de 4 % de la masse de la chaux hydratée de haute surface spécifique (soit 80g de stéarate de calcium). L'agitation dans le mélangeur est démarrée puis le mélange est porté à 200 °C (il faut environ 17 minutes pour chauffer le mélange de 60 à 200 °C). Lorsque cette température de 200 °C est atteinte, le mélange est prolongé pendant 10 minutes à 200 °C, avant d'être stoppé, puis le produit est laissé au repos jusqu'à refroidissement complet.

Cette charge traitée en surface est incorporée à hauteur de 50 % en masse dans une matrice de polyéthylène de moyenne densité (MDPE 3802) en suivant le même protocole que celui décrit dans l'exemple 1. Des plaques identiques à celle de l'exemple 1 sont ensuite préparées et utilisées pour les mesures de cône calorimétrie.

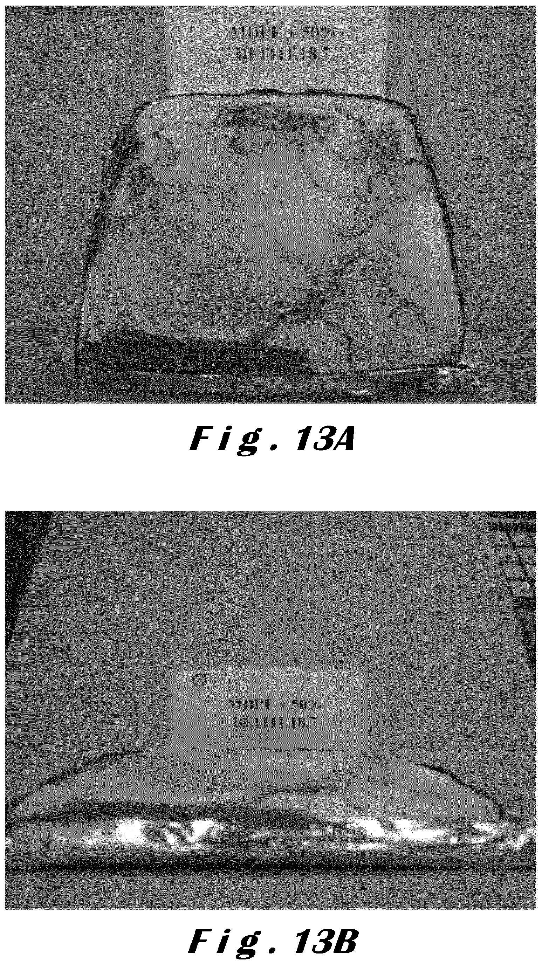

Si le traitement de surface de la chaux hydratée de haute surface spécifique avec du stéarate de calcium n'influence pas les propriétés retardatrices de flamme de la charge (résultats de cône calorimétrie non illustrés ici), ce traitement semble en revanche favoriser la dispersion de la charge dans la matrice polymère et le contact entre la charge et le polymère, conduisant ainsi à la formation d'un résidu cohésif à l'issue de la combustion. Ce résidu de combustion est présenté sur les figures 13 A et 13 B. En comparant ces figures aux figures 2A et 2B qui illustrent le résidu de combustion de la composition de l'exemple 1, il s'avère que le résidu issu de la combustion contenant la chaux hydratée de haute surface spécifique traitée avec du stéarate de calcium est moins gonflé (moins d'intumescence).

### Exemple comparatif 1.- Utilisation en tant que charge retardatrice de flamme d'ATH dans une composition polymère de MDPE

Dans cet exemple comparatif, la matrice polymère est à nouveau le MDPE. Cette fois, la charge n'est plus une charge calcique de haute surface spécifique, mais de l'ATH d'origine commerciale (Albemarle Martinal OL 107 LEO) dont les principales propriétés sont indiquées dans le Tableau 2.

L'ATH est incorporé dans la matrice polymère à hauteur de 50 % en poids de la composition en suivant le protocole décrit dans l'exemple 1 ci-dessus. Comme précédemment, des échantillons de 100 x 100 x 4 mm³ sont préparés et utilisés pour les tests au feu par cône calorimétrie (Figure 3) et les résidus de combustion recueillis à l'issue du test au cône calorimètre sont caractérisés comme expliqué ci-dessus.

L'observation des résidus de combustion montrés aux Figures 15A et 15B et caractérisés au Tableau 5 indique que la composition de cet exemple ne mène pas à l'issue de la combustion à la formation d'un résidu cohésif. Ce résidu se présente en effet sous la forme d'un matériau divisé en une multitude de petits morceaux (cendre ou poudre). La mesure de la résistance mécanique est impossible à réaliser sur ce résidu puisqu'il n'est pas possible de prélever d'échantillons dans ce résidu qui présentent une section au moins aussi grande que la surface du plateau mobile circulaire utilisé pour la mesure (Figure 1).

### Exemple comparatif 2.- Utilisation en tant que charge retardatrice de flamme de MDH dans une composition polymère de MDPE

Cet exemple comparatif 2 correspond à l'exemple comparatif 1 dans lequel l'ATH est remplacé par un MDH d'origine commerciale (Albemarle Magnifin H10) dont les principales caractéristiques sont regroupées dans le Tableau 2.

Le MDH est incorporé dans le MDPE à hauteur de 50 % en poids de la composition en suivant le protocole décrit dans l'exemple 1 ci-dessus. Comme précédemment, des échantillons de 100 x 100 x 4 mm³ sont préparés et utilisés pour les tests au feu par cône calorimétrie (Figure 3) et les résidus de combustion recueillis à l'issue du test au cône calorimètre sont caractérisés comme expliqué ci-dessus.

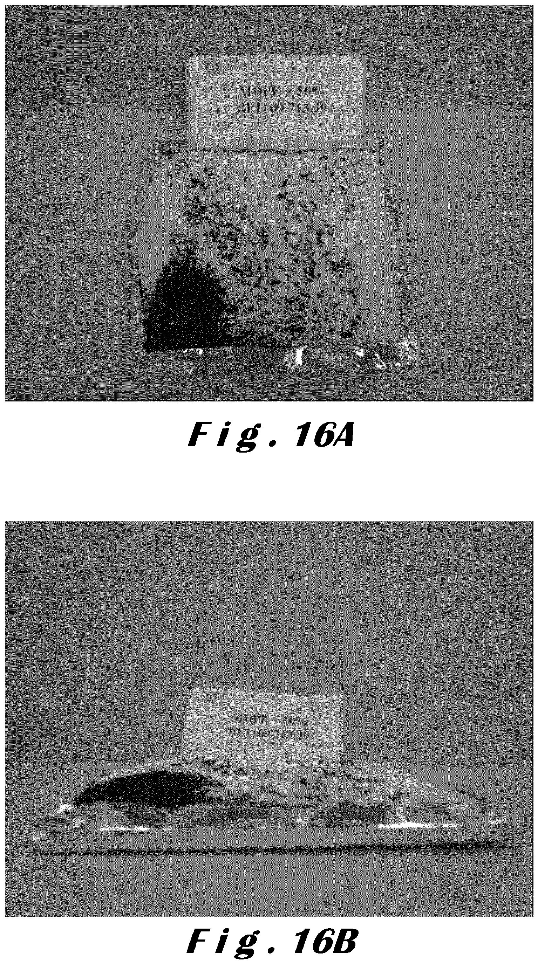

L'observation des résidus de combustion montrés aux Figures 16A et 16B et caractérisés au Tableau 5 indique que la composition de cet exemple ne mène pas, à l'issue de la combustion, à la formation d'un résidu cohésif. Ce résidu se présente en effet sous la forme d'un matériau divisé qui peut être considéré comme une poudre. Pour les mêmes raisons que dans l'exemple comparatif 1, la mesure de la résistance mécanique est impossible à réaliser sur ce résidu.

### Exemple comparatif 3.- Utilisation en tant que charge retardatrice de flamme d'une charge minérale composée de Ca(OH)₂ et d'ATH en mélange dans une composition polymère de MDPE.

La composition de cet exemple est similaire à celle de l'exemple 5 ci-dessus dans la mesure où la charge minérale est un mélange de 30 % en poids d'ATH (Albemarle Martinal OL 107 LEO décrit dans le Tableau 2) et de 20 % en poids de chaux hydratée, ces pourcentages étant exprimés par rapport au poids total de la composition. Néanmoins, dans cet exemple comparatif, la chaux hydratée est une chaux hydratée standard et non une chaux hydratée de haute surface spécifique comme cela était le cas dans l'exemple 5. Si les chaux hydratées de haute surface spécifique sont obtenues industriellement en hydratant une chaux vive avec un excès d'eau avant d'être séchées puis désagglomérées, les chaux hydratées standards sont obtenues en hydratant une chaux vive en voie sèche et sortent de l'hydrateur avec une humidité suffisamment faible pour ne pas nécessiter une étape de séchage (humidité < à 2 % en poids). Les principales propriétés de la chaux hydratée standard selon cet exemple sont reprises dans le tableau 4.

Comme dans l'exemple 5, ce mélange de charges est incorporé dans le MDPE et les compositions ainsi préparées sont caractérisées, tout comme les résidus de combustion.

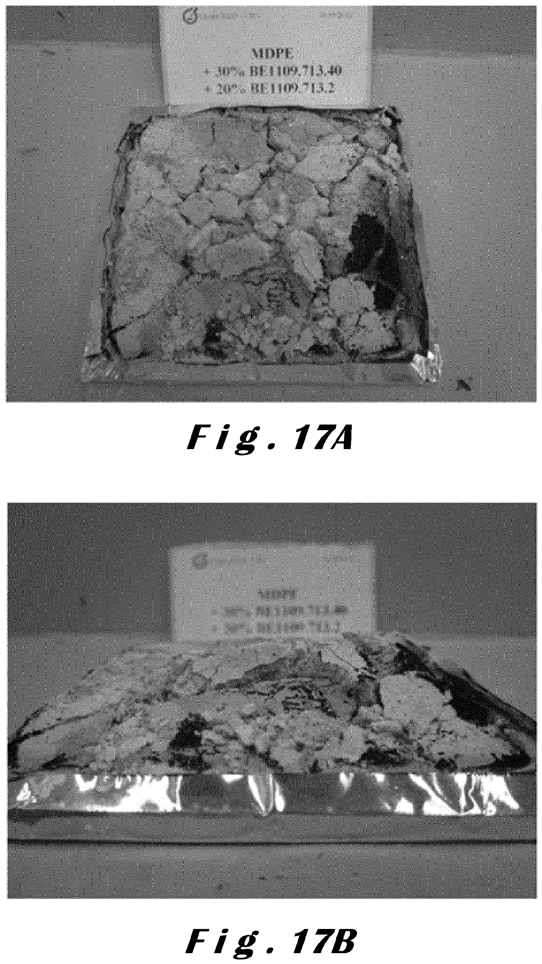

L'observation des résidus de combustion montrés aux Figures 17A et 17B indique que la composition de cet exemple mène, à l'issue de la combustion, à la formation d'un résidu non cohésif, au contraire du résidu issu de la combustion de la composition de l'exemple 5 présenté aux figures 8A et 8B. Cette observation confirme l'impact positif d'une surface spécifique élevée de la charge sur la cohésion du résidu de combustion.

### Exemple comparatif 4.- Utilisation en tant que charge retardatrice de flamme d'une chaux hydratée de basse surface spécifique dans une composition polymère de MDPE

Cet exemple comparatif est similaire à l'exemple comparatif 3, à ceci près que la chaux hydratée standard de l'exemple comparatif 3 a été remplacée par une chaux hydratée ayant une surface spécifique encore plus faible. Cette chaux hydratée de faible surface spécifique est synthétisée industriellement avec un procédé semblable à celui utilisé pour la production de chaux hydratée standard, mais en ajoutant au cours de la synthèse un additif qui accélère la cinétique d'hydratation de la chaux vive, conduit à la fermeture de la porosité et empêche le développement de la surface spécifique de la chaux hydratée. Les principales caractéristiques de la chaux hydratée de cet exemple sont regroupées dans le Tableau 4.

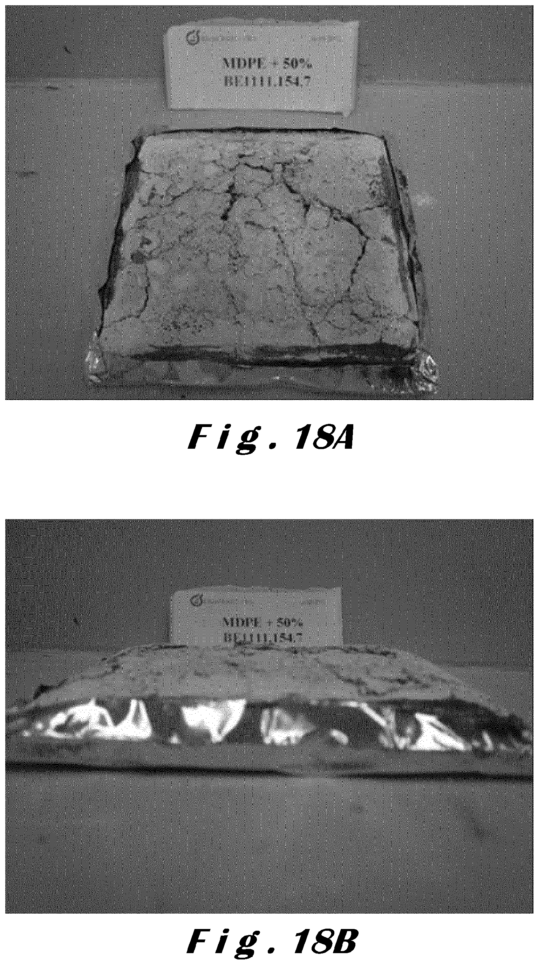

L'observation des résidus de combustion montrés aux Figures 18A et 18B et caractérisés au Tableau 5 indique que la composition de cet exemple mène, à l'issue de la combustion, à la formation d'un résidu cohésif, mais ce résidu est nettement moins cohésif que les résidus obtenus avec les compositions à base de chaux hydratée de haute surface spécifique dans les exemples 1 et 3. Il est même moins cohésif que le résidu de combustion de la composition de l'exemple comparatif 3. Ce résidu présente en effet 8 à 10 fissures transverses et ces fissures sont profondes. Avec cette fissuration, un échantillon de section apparentée à un carré de 10 mm de côté environ seulement peut être prélevé sur toute l'épaisseur de ce résidu. Par ailleurs, la mesure de la résistance mécanique du résidu conduit à une valeur moyenne (sur 3 mesures réalisées sur des prélèvements effectués à différents endroits dans le résidu de combustion) de 8 kPa, les trois valeurs mesurées étant 4 kPa, 7 kPa et 14 kPa.

Il est bien entendu que la présente invention n'est en aucune façon limitée aux formes de réalisations décrites ci-dessus et que bien des modifications peuvent y être apportées sans sortir du cadre des revendications annexées.

| **Tableau 1** | Chaux hydratée de haute surface spécifique n° 1 (exemples 1, 2, 5,6 et 7) | Chaux hydratée de haute surface spécifique n°2 (exemple 3) |
|---|---|---|
| Ca(OH)₂ (%mass.) | 94,6 | 86,2 |
| CaCO₃ (% mass.) | 4,7 | 11,7 |
| Somme impuretés ⁽¹⁾ (% mass.) | 0,99 | 2,54 |
| Fe₂O₃ (% mass.) | 0,09 | 0,26 |
| Humidité 150 °C (% mass.) | 0,86 | 1,33 |
| Surface BET (m²/g) | 41,3 | 36,3 |
| Volume poreux (cm³/g) | 0,231 | 0,206 |
| Granulométrie | | |
| d₃ (µm) | 0,9 | 1,1 |
| d₁₀ (µm) | 1,3 | 1,8 |
| d₅₀ (µm) | 3,5 | 8,9 |
| d₉₀ (µm) | 9,8 | 76,4 |
| d₉₇ (µm) | 22,7 | 161,2 |
| d₁₀₀ (µm) | 43,7 | 449,7 |
| T décomposition Ca(OH)₂ (°C) | 410-590 | 400-600 |
| T 95% (°C) | 482 | 490 |

| | | |
|---|---|---|
| ⁽¹⁾ : MgO + SiO₂ + Al₂O₃ + Fe₂O₃ + MnO + P₂O₅ + K₂O + SO₃ | | |

**Tableau 2**

| | ATH (exemples 5, 6 et comparatif 1) | MDH (exemple comparatif 2) |
|---|---|---|
| Al(OH)₃ (% mass.) | 99.8 | - |
| Mg(OH)₂ (% mass.) | - | 99.9 |
| Somme impuretés ⁽¹⁾ (% mass.) | 0.19 | 0.03 |
| Surface BET (m²/g) | 5.3 | 9.5 |
| Volume poreux (cm³/g) | 0,017 | 0,029 |
| Granulométrie) | | |
| d₃ (µm) | 0,6 | 0,5 |
| d₁₀ (µm) | 0,9 | 0,7 |
| d₅₀ (µm) | 1,8 | 1,7 |
| d₉₀ (µm) | 3,5 | 25,0 |
| d₉₇ (µm) | 4,4 | 52,6 |
| d₁₀₀ (µm) | 7,4 | 83,9 |
| T décomposition hydroxyde (°C) | 210-550 | 340-550 |
| T 95% (°C) | 301 | 413 |

| | | |
|---|---|---|
| ⁽¹⁾ : SiO₂ + CaO + Fe₂O₃ + Na₂O + SO₃ + Cl | | |

**Tableau 3**

| | Charge de laboratoire de haute surface spécifique n°1 (exemple 4) |
|---|---|
| Ca(OH)₂ (% mass.) | 76,0 |
| Mg(OH)₂ (% mass.) | 13,6 |
| CaCO₃ (% mass.) | 8,8 |
| Somme impuretés ⁽¹⁾ (% mass.) | 0,98 |
| Fe₂O₃ (% mass.) | 0,24 |
| Humidité 150 °C (% mass.) | 1,4 |
| Surface BET (m²/g) | 29,5 |
| Volume poreux (cm³/g) | 0,151 |
| Granulométrie | |
| d₃ (µm) | 0,7 |
| d₁₀ (µm) | 1,0 |
| d₅₀ (µm) | 2,7 |
| d₉₀ (µm) | 6,8 |
| d₉₇ (µm) | 8,6 |
| d₁₀₀ (µm) | 14,3 |
| T décomposition Mg(OH)₂ (°C) | 250-430 |
| T décomposition Ca(OH)₂ (°C) | 430-580 |
| T 95% (°C) | 400 |

| | |
|---|---|
| ⁽¹⁾ : MgO + SiO₂ + Al₂O₃ + Fe₂O₃ + MnO + P₂O₅ + K₂O + SO₃ | |

**Tableau 4 :**

| | Chaux hydratée standard (exemple comparatif 3) | Chaux hydratée de faible surface spécifique (exemple comparatif 4) |
|---|---|---|
| Ca(OH)₂ (% mass.) | 92,8 | 96,4 |
| CaCO₃ (% mass.) | 5,9 | 1,5 |
| Somme impuretés ⁽¹⁾ (% mass.) | 1,26 | 1,68 |
| Fe₂O₃ (% mass.) | 0,13 | 0,20 |
| Humidité 150 °C (% mass.) | 0,7 | 0,5 |
| Surface BET (m²g) | 15,8 | 7,5 |
| Volume poreux (cm³/g) | 0,073 | 0,033 |
| Granulométrie | | |
| d₃ (µm) | 0,8 | 0,8 |
| d₁₀ (µm) | 1,2 | 1,7 |
| d₅₀ (µm) | 2,9 | 7,4 |
| d₉₀ (µm) | 6,2 | 101,1 |
| d₉₇ (µm) | 33,0 | 161,2 |
| d₁₀₀ (µm) | 309,6 | 309,6 |
| T décomposition Ca(OH)₂ (°C) | 400-560 | 400-610 |
| T 95% (°C) | 455 | 477 |

| | | |
|---|---|---|
| ⁽¹⁾ : MgO + SiO₂ + Al₂O₃ + Fe₂O₃ + MnO + P₂O₅ + K₂O + SO₃ | | |

**Tableau 5 :**

| | Exemples | | | | | | | Exemples comparatifs | | | |
|---|---|---|---|---|---|---|---|---|---|---|---|
| | 1 | 2 | 3 | 4 | 5 | 6 | 7 | 1 | 2 | 3 | 4 |
| Nombre de fissures transverses | 0 | 0 | 2 | 1 | 0 | 0 | 2 | >10 | >10 | >10 | 8-10 |
| Fissures profondes | - | - | non | Non | - | - | non | oui | oui | oui | oui |
| Taille maximale d'un prélèvement (mm) ⁽¹⁾ | - | - | 30 | 30 | - | - | 20 | <10 | <10 | <10 | 10 |
| Résistance mécanique moyenne (kPa) | 110 | 65 | 20 | 38 | 9 | 4 | 124 | - | - | - | 8 |
| Résistance mécanique minimale (kPa) | 71 | 43 | 14 | 28 | 4 | 3 | 109 | - | - | - | 4 |
| Résistance mécanique maximale (kPa) | 140 | 91 | 31 | 43 | 19 | 4 | 134 | - | - | - | 14 |

| | | | | | | | | | | | |
|---|---|---|---|---|---|---|---|---|---|---|---|
| ⁽¹⁾ taille maximale de l'échantillon (échantillon faisant toute l'épaisseur du résidu et dont la section est assimilée à un carré) qui peut être prélevé sans être cassé dans le résidu obtenu à l'issue du test de cône calorimétrie qui mesure 100 mm de côté. | | | | | | | | | | | |

## Revendications

1. Composition polymère ignifugée comprenant une charge minérale et un polymère, ladite charge minérale comprenant un composé calcique, **caractérisée en ce que** le composé calcique est un additif de résistance au feu sous forme d'hydroxyde de calcium de formule générale xCa(OH)₂.yMg(OH)₂.zl, où x, y et z sont des proportions massiques avec y compris entre 0,4 et 58,0 %, la somme des x, y et z valant 100% et la somme de x et y étant supérieure ou égale à 88 %, I représente les impuretés et présentant une surface spécifique calculée selon la méthode BET supérieure à 25 m²/g, de préférence supérieure à 30 m²/g, de manière plus préférentielle, supérieure à 35 m²/g et avantageusement supérieure à 40 m²_{/}g_{.}

2. Composition polymère ignifugée selon la revendication 1, dans laquelle ladite charge minérale comprenant un composé calcique présente un volume poreux compris entre 0,10 et 0,30 cm³/g, de préférence supérieur à 0,15 cm³/g, de manière particulièrement avantageuse supérieur à 0,20 cm³/g, en particulier inférieur à 0,25 cm³/g.

3. Composition polymère ignifugée selon l'une quelconque des revendications 1 ou 2, dans laquelle ladite charge minérale comprend en outre au moins un composé magnésien, sous forme d'un hydroxyde de magnésium, en tant qu'additif retardateur de flamme.

4. Composition polymère ignifugée selon la revendication 3, dans laquelle le composé calcique et le composé magnésien de ladite charge minérale sont deux composés séparés en mélange.

5. Composition polymère ignifugée selon la revendication 3, dans laquelle le composé calcique et le composé magnésien de ladite charge minérale sont intimement liés provenant d'une extinction de chaux vive avec une suspension d'hydroxyde de magnésium.

6. Composition polymère ignifugée selon l'une quelconque des revendications 3 à 5, dans laquelle la charge minérale comprenant un composé calcique et un composé magnésien présente une surface spécifique supérieure à 20 m²/g, de préférence supérieure à 25 m²/g, en particulier supérieure à 30 m²/g et inférieure à 50 m²/g, en particulier inférieure à 45 m²/g, notamment inférieure à 40m²/g, voire inférieure à 35 m²/g_{.}

7. Composition selon l'une quelconque des revendications 3 à 6, dans laquelle ladite charge minérale comprenant un composé calcique et un composé magnésien présente un volume poreux supérieur à 0,10 cm³/g, de préférence supérieur à 0,11 cm³/g, avantageusement supérieur à 0,13 cm³/g et inférieur à 0,25 cm³/g, en particulier inférieur à 0,20 cm³/g, notamment inférieur à 0,18 cm³/g, voire inférieur à 0,16 cm³/g.

8. Composition polymère ignifugée selon l'une quelconque des revendications précédentes, dans laquelle ledit polymère est un polymère organique en particulier, un polymère organique thermoplastique, thermodurcissable ou élastomère, d'origine naturelle ou synthétique.

9. Compositon polymère ignifugée selon l'une quelconque des revendications précédentes, dans laquelle ledit polymère organique est choisi dans le groupe constitué d'un polyéthylène, d'un polypropylène, d'un polystyrène, d'un copolymère d'éthylène et de propylène (EPR), d'un terpolymère-éthylène-propylènediène (EPDM), d'un copolymère d'éthylène et d'acétate de vinyle (EVA) à faible teneur en acétate, d'un copolymère d'éthylène et d'acrylate de méthyle (EMA) à faible teneur en acrylate, d'un copolymère d'éthylène et d'acrylate d'éthyle (EEA) à faible teneur en acrylate, d'un copolymère d'éthylène et d'acrylate de butyle (EBA) à faible teneur en acrylate, d'un copolymère d'éthylène et d'octène, d'un polymère à base d'éthylène, d'un polymère à base de polypropylène, d'un polymère à base de polystyrène, d'un polymère halogéné, d'un silicone et d'un quelconque mélange de ces composés.

10. Composition polymère ignifugée selon la revendication 8 ou la revendication 9, dans laquelle la charge minérale selon la présente invention est incorporée dans la composition polymère ignifugée à hauteur de 1 à 80 % en poids, avantageusement de 40 à 75 % en poids, par rapport au poids total de ladite composition polymère ignifugée

11. Composition polymère ignifugée, selon l'une quelconque des revendications précédentes, dans laquelle les particules présentent une taille de particules d₉₀ inférieure à 80 µm, de préférence inférieure à 60 µm.

12. Composition polymère ignifugée, selon l'une quelconque des revendications précédentes, dans laquelle les particules présentent une taille de particules d₉₇ inférieure à 200 µm, de préférence inférieure à 100 µm.

13. Utilisation d'une charge minérale comprenant un composé calcique sous forme d'hydroxyde de calcium présentant une surface spécifique calculée selon la méthode BET supérieure à 25 m²/g, de préférence supérieure à 30 m²/g, de manière plus préférentielle, supérieure à 35 m²/g, et de manière encore plus préférentielle supérieure à 40 m²/g, comme additif de résistance au feu pour une composition polymère ignifugée.

14. Utilisation selon la revendication 13, dans laquelle ledit composé calcique sous forme d'hydroxyde de calcium présente un volume poreux supérieur à 0,10 cm³/g, de préférence supérieur à 0,11 cm³/g, avantageusement supérieur à 0,13 cm³/g et inférieur à 0,25 cm³/g, en particulier inférieur à 0,20 cm³/g, notamment inférieur à 0,18 cm³/g, voire inférieur à 0,16 cm³/g.

15. Utilisation selon la revendication 13 ou 14, dans laquelle ladite charge minérale comprend en outre au moins un composé magnésien, sous forme d'un hydroxyde de magnésium, en tant qu'additif retardateur de flamme pour une composition polymère ignifugée.

16. Utilisation selon la revendication 15, dans laquelle le composé calcique et le composé magnésien de ladite charge minérale sont deux composés séparés en mélange.

17. Utilisation selon la revendication 15, dans laquelle le composé calcique et le composé magnésien de ladite charge minérale sont intimement liés provenant d'une extinction de chaux vive en présence d'une suspension d'hydroxyde de magnésium.

18. Utilisation selon l'une quelconque des revendications 15 à 17, dans laquelle la charge minérale comprenant un composé calcique et un composé magnésien présente une surface spécifique supérieure à 20 m²/g, de préférence supérieure à 25 m²/g, en particulier supérieure à 30 m²/g et inférieure à 50 m²/g, en particulier inférieure à 45 m²/g, notamment inférieure à 40m²/g, voire inférieure à 35 m²/g.

19. Utilisation selon l'une quelconque des revendications 15 à 18, dans laquelle ladite charge minérale comprenant un composé calcique et un composé magnésien présente un volume poreux supérieur à 0,10 cm³/g, de préférence supérieur à 0,11 cm³/g, avantageusement supérieur à 0,13 cm³/g et inférieur à 0,25 cm³/g, en particulier inférieur à 0,20 cm³/g, notamment inférieur à 0,18 cm³/g, voire inférieur à 0,16 cm³/g.

20. Utilisation selon l'une quelconque des revendications 13 à 19, dans laquelle ledit polymère est un polymère organique en particulier, un polymère organique thermoplastique, thermodurcissable ou élastomère, d'origine naturelle ou synthétique.

21. Utilisation selon l'une quelconque des revendications 13 à 20, dans laquelle ledit polymère organique est choisi dans le groupe constitué d'un polyéthylène, d'un polypropylène, d'un polystyrène, d'un copolymère d'éthylène et de propylène (EPR), d'un terpolymère-éthylène-propylènediène (EPDM), d'un copolymère d'éthylène et d'acétate de vinyle (EVA) à faible teneur en acétate, d'un copolymère d'éthylène et d'acrylate de méthyle (EMA) à faible teneur en acrylate, d'un copolymère d'éthylène et d'acrylate d'éthyle (EEA) à faible teneur en acrylate, d'un copolymère d'éthylène et d'acrylate de butyle (EBA) à faible teneur en acrylate, d'un copolymère d'éthylène et d'octène, d'un polymère à base d'éthylène, d'un polymère à base de polypropylène, d'un polymère à base de polystyrène, d'un polymère halogéné, d'un silicone et d'un quelconque mélange de ces composés.

22. Utilisation selon la revendication 20 ou la revendication 21, dans laquelle la charge minérale est incorporée dans la composition polymère ignifugée à hauteur de 1 à 80 % en poids, avantageusement de 40 à 75 % en poids, par rapport au poids total de ladite composition polymère ignifugée.

23. Utilisation selon l'une quelconque des revendications 13 à 21, dans laquelle les particules présentent une taille de particules d₉₀ inférieure à 80 µm, de préférence inférieure à 60 µm.

24. Utilisation selon l'une quelconque des revendications 13 à 23, dans laquelle les particules présentent une taille de particules d₉₇ inférieure à 200 µm, de préférence inférieure à 100 µm.

25. Résidu de combustion d'une composition polymère ignifugée selon l'une quelconque des revendications 1 à 12, **caractérisée en ce que** le résidu est un résidu cohésif présentant une résistance mécanique à la rupture en compression moyenne qui est supérieure à 3 kPa, de préférence supérieure à 8 kPa, de manière préférentielle supérieure à 20 kPa et de manière particulièrement avantageuse supérieure à 60 kPa.

26. Résidu de combustion selon la revendication 25, dans lequel ledit résidu de combustion n'est traversé que par un nombre de fissures très limité, inférieur ou égal à 3, de préférence inférieur ou égal à 2, voire à 1 et de manière particulièrement préférentielle nul, après combustion selon la méthode normalisée du cône calorimètre ISO 5660-1 ou ASTM E 1354.

27. Résidu de combustion selon la revendication 25 ou la revendication 26, présentant, après combustion selon la méthode normalisée du cône calorimètre ISO 5660-1 ou ASTM E 1354, une taille maximale de résidu de combustion dont la section est assimilée à un carré pouvant être prélevé sans être cassé dans ledit résidu obtenu supérieure ou égale à 10 mm, de préférence supérieure ou égale à 30 mm, de préférence supérieure ou égale à 50 mm, à partir d'un échantillon avant combustion de section carrée de 100 mm.

## Patentansprüche

1. Flammhemmende Polymerzusammensetzung, welche einen mineralischen Füllstoff und ein Polymer umfasst, wobei der erwähnte mineralische Füllstoff eine Calciumverbindung umfasst, **dadurch gekennzeichnet, dass** die Calciumverbindung ein feuerbeständiger Zusatz in Form von Calciumhydroxid mit der allgemeinen Formel xCa(OH)₂.yMg(OH)₂.zI ist, wobei x, y und z Massenanteile sind, wobei y zwischen 0,4 und 58,0 % liegt, die Summe von x, y und z 100 % ist und die Summe von x und y höher als oder gleich 88 % ist, I die Verunreinigungen repräsentiert und eine spezifische Oberfläche, berechnet nach der BET-Methode, von mehr als 25 m²/g aufweist, bevorzugt mehr als 30 m²/g, noch besser mehr als 35 m²/g und vorteilhafterweise mehr als 40 m²/g.

2. Flammhemmende Polymerzusammensetzung nach Anspruch 1, wobei der erwähnte mineralische Füllstoff, der eine Calciumverbindung umfasst, ein Porenvolumen von zwischen 0,10 und 0,30 cm³/g aufweist, bevorzugt mehr als 0,15 cm³/g, besonders vorteilhafterweise mehr als 0,20 cm³/g, insbesondere weniger als 0,25 cm³/g.

3. Flammhemmende Polymerzusammensetzung nach irgendeinem der Ansprüche 1 oder 2, wobei der erwähnte mineralische Füllstoff ferner zumindest eine Magnesiumverbindung, in Form eines Magnesiumhydroxids, als flammhemmenden Zusatz umfasst.

4. Flammhemmende Polymerzusammensetzung nach Anspruch 3, wobei die Calciumverbindung und die Magnesiumverbindung des erwähnten mineralischen Füllstoffs zwei in Mischung getrennte Verbindungen sind.

5. Flammhemmende Polymerzusammensetzung nach Anspruch 3, wobei die Calciumverbindung und die Magnesiumverbindung des erwähnten mineralischen Füllstoffs stark gebunden sind, da sie aus der Löschung von Branntkalk mit einer Magnesiumhydroxidsuspension stammen.

6. Flammhemmende Polymerzusammensetzung nach irgendeinem der Ansprüche 3 bis 5, wobei der mineralische Füllstoff, welcher eine Calciumverbindung und eine Magnesiumverbindung umfasst, eine spezifische Oberfläche von mehr als 20 m²/g aufweist, bevorzugt mehr als 25 m²/g, insbesondere mehr als 30 m²/g und weniger als 50 m²/g, insbesondere weniger als 45 m²/g, nämlich weniger als 40 m²/g, bzw. weniger als 35 m²/g.

7. Zusammensetzung nach irgendeinem der Ansprüche 3 bis 6, wobei der erwähnte mineralische Füllstoff, welcher eine Calciumverbindung und eine Magnesiumverbindung umfasst, ein Porenvolumen von mehr als 0,10 cm³/g aufweist, bevorzugt mehr als 0,11 cm³/g, vorteilhafterweise mehr als 0,13 cm³/g und weniger als 0,25 cm³/g, insbesondere weniger als 0,20 cm³/g, nämlich weniger als 0,18 cm³/g, bzw. weniger als 0,16 cm³/g.

8. Flammhemmende Polymerzusammensetzung nach irgendeinem der vorigen Ansprüche, wobei das erwähnte Polymer insbesondere ein organisches Polymer ist, ein organisches thermoplastisches, hitzehärtbares oder elastomeres Polymer natürlichen oder synthetischen Ursprungs.

9. Flammhemmende Polymerzusammensetzung nach irgendeinem der vorigen Ansprüche, wobei das erwähnte organische Polymer ausgewählt wird aus der Gruppe bestehend aus einem Polyethylen, einem Polypropylen, einem Polystyrol, einem Ethylen-Propylen-Copolymer (EPR), einem Ethylen-Propylendien-Terpolymer (EPDM), einem Ethylen-Vinylacetat-Copolymer (EVA) mit geringem Acetatanteil, einem Ethylen-Methylacrylat-Copolymer (EMA) mit geringem Acrylatanteil, einem Ethylen-Ethylacrylat-Copolymer (EEA) mit geringem Acrylatanteil, einem Ethylen-Butylacrylat-Copolymer (EBA) mit geringem Acrylatanteil, einem Ethylen-Octen-Copolymer, einem Polymer auf Basis von Ethylen, einem Polymer auf Basis von Polypropylen, einem Polymer auf Basis von Polystyrol, einem halogenierten Polymer, einem Silikon und irgendeiner Mischung dieser Verbindungen.

10. Flammhemmende Polymerzusammensetzung nach Anspruch 8 oder Anspruch 9, wobei der mineralische Füllstoff nach der vorliegenden Erfindung im Umfang von 1 bis 80 Gew.-%, vorteilhafterweise von 40 bis 75 Gew.-% im Verhältnis zum Gesamtgewicht der erwähnten flammhemmenden Polymerzusammensetzung, in die flammhemmende Polymerzusammensetzung integriert ist.

11. Flammhemmende Polymerzusammensetzung nach irgendeinem der vorigen Ansprüche, wobei die Partikel eine Partikelgröße d₉₀ von weniger als 80 µm aufweisen, bevorzugt weniger als 60 µm.

12. Flammhemmende Polymerzusammensetzung nach irgendeinem der vorigen Ansprüche, wobei die Partikel eine Partikelgröße d₉₇ von weniger als 200 µm aufweisen, bevorzugt weniger als 100 µm.

13. Verwendung eines mineralischen Füllstoffs, welcher eine Calciumverbindung in Form von Calciumhydroxid umfasst, mit einer spezifischen Oberfläche, berechnet nach dem BET-Verfahren, von mehr als 25 m²/g, bevorzugt mehr als 30 m²/g, besser mehr als 35 m²/g, noch besser mehr als 40 m²/g, als feuerbeständiger Zusatz für eine flammhemmende Polymerzusammensetzung.

14. Verwendung nach Anspruch 13, wobei die erwähnte Calciumverbindung in Form von Calciumhydroxid ein Porenvolumen von mehr als 0,10 cm³/g aufweist, bevorzugt mehr als 0,11 cm³/g, vorteilhafterweise mehr als 0,13 cm³/g und weniger als 0,25 cm³/g, insbesondere weniger als 0,20 cm³/g, nämlich weniger als 0,18 cm³/g, bzw. weniger als 0,16 cm³/g.

15. Verwendung nach Anspruch 13 oder 14, wobei der erwähnte mineralische Füllstoff ferner zumindest eine Magnesiumverbindung, in Form eines Magnesiumhydroxids, als Flammschutzmittel für eine flammhemmende Polymerzusammensetzung umfasst.

16. Verwendung nach Anspruch 15, wobei die Calciumverbindung und die Magnesiumverbindung des erwähnten mineralischen Füllstoffs zwei in Mischung getrennte Verbindungen sind.

17. Verwendung nach Anspruch 15, wobei die Calciumverbindung und die Magnesiumverbindung des erwähnten mineralischen Füllstoffs stark gebunden sind, da sie aus der Löschung von Branntkalk in Anwesenheit einer Magnesiumhydroxidsuspension stammen.

18. Verwendung nach irgendeinem der Ansprüche 15 bis 17, wobei der mineralische Füllstoff, welcher eine Calciumverbindung und eine Magnesiumverbindung umfasst, eine spezifische Oberfläche von mehr als 20 m²/g aufweist, bevorzugt mehr als 25 m²/g, insbesondere mehr als 30 m²/g und weniger als 50 m²/g, insbesondere weniger als 45 m²/g, nämlich weniger als 40m²/g, bzw. weniger als 35 m²/g.

19. Verwendung nach irgendeinem der Ansprüche 15 bis 18, wobei der erwähnte mineralische Füllstoff, welcher eine Calciumverbindung und eine Magnesiumverbindung umfasst, ein Porenvolumen von mehr als 0,10 cm³/g aufweist, bevorzugt mehr als 0,11 cm³/g, vorteilhafterweise mehr als 0,13 cm³/g und weniger als 0,25 cm³/g, insbesondere weniger als 0,20 cm³/g, nämlich weniger als 0,18 cm³/g, bzw. weniger als 0,16 cm³/g.

20. Verwendung nach irgendeinem der Ansprüche 13 bis 19, wobei das erwähnte Polymer ein organisches Polymer ist, insbesondere ein organisches thermoplastisches, hitzehärtbares oder elastomeres Polymer natürlichen oder synthetischen Ursprungs.

21. Verwendung nach irgendeinem der Ansprüche 13 bis 20, wobei das erwähnte organische Polymer ausgewählt wird aus der Gruppe bestehend aus einem Polyethylen, einem Polypropylen, einem Polystyrol, einem Ethylen-Propylen-Copolymer (EPR), einem Ethylen-Propylendien-Terpolymer (EPDM), einem Ethylen-Vinylacetat-Copolymer (EVA) mit geringem Acetatanteil, einem Ethylen-Methylacrylat-Copolymer (EMA) mit geringem Acrylatanteil, einem Ethylen-Ethylacrylat-Copolymer (EEA) mit geringem Acrylatanteil, einem Ethylen-Butylacrylat-Copolymer (EBA) mit geringem Acrylatanteil, einem Ethylen-Octen-Copolymer, einem Polymer auf Basis von Ethylen, einem Polymer auf Basis von Polypropylen, einem Polymer auf Basis von Polystyrol, einem halogenierten Polymer, einem Silikon und irgendeiner Mischung dieser Verbindungen.

22. Verwendung nach Anspruch 20 oder Anspruch 21, wobei der mineralische Füllstoff im Umfang von 1 bis 80 Gew.-%, vorteilhafterweise von 40 bis 75 Gew.-% im Verhältnis zum Gesamtgewicht der erwähnten flammhemmenden Polymerzusammensetzung, in die flammhemmende Polymerzusammensetzung integriert ist.

23. Verwendung nach irgendeinem der Ansprüche 13 bis 21, wobei die Partikel eine Partikelgröße d₉₀ von weniger als 80 µm aufweisen, bevorzugt weniger als 60 µm.

24. Verwendung nach irgendeinem der Ansprüche 13 bis 23, wobei die Partikel eine Partikelgröße d₉₇ von weniger als 200 µm aufweisen, bevorzugt weniger als 100 µm.

25. Verbrennungsrückstand einer flammhemmenden Polymerzusammensetzung nach irgendeinem der Ansprüche 1 bis 12, **dadurch gekennzeichnet, dass** der Rückstand ein kohäsiver Rückstand mit einer mechanischen Bruchfestigkeit bei durchschnittlicher Kompression von mehr als 3 kPa hat, bevorzugt mehr als 8 kPa, vorzugsweise mehr als 20 kPa und besonders vorteilhafterweise mehr als 60 kPa.

26. Verbrennungsrückstand nach Anspruch 25, wobei der erwähnte Verbrennungsrückstand nur durch eine sehr beschränkte Anzahl von Rissen, weniger als oder gleich 3, bevorzugt weniger als oder gleich 2, bzw. 1 und besonders bevorzugter Weise null, nach Verbrennung nach dem normierten Cone-Calorimeter-Verfahren gemäß ISO 5660-1 oder ASTM E 1354, durchdrungen wird.

27. Verbrennungsrückstand nach Anspruch 25 oder Anspruch 26, welcher, nach Verbrennung nach dem normierten Cone-Calorimeter-Verfahren gemäß ISO 5660-1 oder ASTM E 1354, eine maximale Größe des Verbrennungsrückstands, dessen Querschnitt mit einem Quadrat gleichgestellt ist, das aus dem erwähnten erhaltenen Rückstand entnommen werden kann, ohne zu zerbrechen, von mehr als oder gleich 10 mm aufweist, bevorzugt mehr als oder gleich 30 mm, bevorzugt mehr als oder gleich 50 mm, ausgehend von einer Probe vor der Verbrennung mit einem quadratischen Querschnitt von 100 mm.

## Claims

1. A flame-retardant polymer composition comprising a mineral filler and a polymer, said mineral filler comprising a calcium compound, **characterized in that** the calcium compound is a fire-resistant additive as calcium hydroxide of general formula xCa(OH)₂.yMg(OH)₂.zl, wherein x, y, z are mass proportions with y, comprised between 0.4 and 58.0%, the sum of the x, y, and z having the value of 100% and the sum of x and y being greater than or equal to 88%, I represents the impurities and having a specific surface area calculated according to the BET method greater than 25 m²/g, preferably greater than 30 m²/g, more preferentially greater than 35 m²/g and advantageously greater than 40 m²/g.

2. The flame-retardant polymer composition according to claim 1, wherein said mineral filler comprising a calcium compound has a pore volume comprised between 0.10 and 0.30 cm³/g, preferably greater than 0.15 cm³/g, particularly advantageously greater than 0.20 cm³/g, in particular lower than 0.25 cm³/g,

3. The flame-retardant polymer composition according to any of claims 1 or 2 wherein said mineral filler further comprises at least one magnesium compound, as a magnesium hydroxide, as a flame-retardant additive.

4. The flame-retardant polymer composition according to claim 3, wherein the calcium compound and the magnesium compound of said mineral filler are two separate compounds in a mixture.

5. The flame-retardant polymer composition according to claim 3, wherein the calcium compound and the magnesium compound of said mineral filler are intimately bound stemming from slaking of quicklime, with a suspension of magnesium hydroxide.

6. The flame-retardant polymer composition according to any of claims 3 to 5, wherein the mineral filler comprising a calcium compound and a magnesium compound has a specific surface area greater than 20 m²/g, preferably greater than 25 m²/g, in particular greater than 30 m²/g and lower than 50 m²/g, in particular lower than 45 m²/g , notably lower than 40 m²/g, or even lower than 35 m²/g.

7. The composition according to any of claims 3 to 6, wherein said mineral filler comprising a calcium compound and a magnesium compound has a pore volume greater than 0.10 cm³/g, preferably greater than 0.11 cm³/g, advantageously greater than 0.13 cm³/g and lower than 0.25 cm³/g, in particular lower than 0.20 cm³/g, notably lower than 0.18 cm³/g, or even lower than 0.16 cm³/g.

8. The flame-retardant polymer composition according to any of the preceding claims, wherein said polymer is in particular an organic polymer, a thermoplastic organic, thermosetting or elastomeric polymer of natural or synthetic origin.

9. The flame-retardant polymer composition according to any of the preceding claims, wherein said organic polymer is selected from the group consisting of a polyethylene, a polypropylene, a polystyrene, a copolymer of ethylene and propylene (EPR), an ethylene-propylene-diene terpolymer (EPDM), a copolymer of ethylene and vinyl acetate (EVA) with a low acetate content, a copolymer of ethylene and methyl acrylate (EMA) with a low acrylate content, a copolymer of ethylene and ethyl acrylate (EEA) with a low acrylate content, a copolymer of ethylene and butyl acrylate (EBA), with a low acrylate content, a copolymer of ethylene and octene, a polymer based on polystyrene, a halogenated polymer, a silicone and any mixture of these components.

10. The flame-retardant polymer composition according to claim 8 or claim 9, wherein the mineral filler according to the present invention is incorporated into the flame-retardant polymer composition in an amount from 1 to 80% by weight, advantageously from 40 to 75% by weight, based on the total weight of said flame-retardant polymer composition.

11. The flame-retardant polymer composition, according to any of the preceding claims, wherein the particles have a particle size d₉₀ of lower than 80 µm, preferably lower than 60 µm.

12. The flame-retardant polymer composition, according to any of the preceding claims, wherein the particles have a particle size d₉₇ of lower than 200 µm, preferably lower than 100 µm.

13. The use of a mineral filler comprising a calcium compound as calcium hydroxide having a specific surface area calculated according to the BET method greater than 25 m²/g, preferably greater than 30 m²/g, more preferentially greater than 35 m²/g, and still more preferentially greater than 40 m²/g, as a fire-resistant additive for a flame-retardant, composition.

14. The use according to claim 13, wherein said calcium compound as calcium hydroxide has a pore volume greater than 0.10 cm³/g, preferably greater than 0.11 cm³/g, advantageously greater than 0.13 cm³/g and lower than 0.25 cm³/g, in particular lower than 0.20 cm³/g, notably lower than 0.18 cm³/g, or even lower than 0.16 cm³/g,

15. The use according to claim 13 or 14, wherein said mineral filler further comprises at least one magnesium compound, as magnesium hydroxide, as a flame-retardant additive for a flame-retardant polymer composition.

16. The use according to claim 15, wherein the calcium compound and the magnesium compound of said mineral filler are two separate compounds in a mixture.

17. The use according to claim 15, wherein the calcium compound and the magnesium compound of said mineral filler are intimately bound stemming from slaking of quicklime in the presence of a magnesium hydroxide suspension.

18. The use according to any of claims 15 to 17, wherein the mineral filler comprising a calcium compound and a magnesium compound has a specific surface area of greater than 20 m²/g, preferably greater than 25 m²/g, in particular the greater than 30 m²/g and lower than 50 m²/g, in particular lower than 45 m²/g, notably lower than 40 m²/g; or even lower than 35 m²/g.

19. The use according to any of claims 15 to 18, wherein said mineral filler comprising a calcium compound and a magnesium compound has a pore volume greater than 0.10 cm³/g, preferably greater than 0.11 cm³/g, advantageously greater than 0.13 cm³/g and lower than 0.25 cm³/g, in particular lower than 0.20 cm³/g, notably lower than 0.18 cm³/g, or even lower than 0.16 cm³/g,

20. The use according to any of claims 13 to 19, wherein said polymer is an organic polymer, in particular a thermoplastic, thermosetting or elastomeric organic polymer of natural or artificial origin.

21. The use according to any of claims 13 to 20, wherein said organic polymer is selected from the group consisting of a polyethylene, a polypropylene, a polystyrene, a copolymer of ethylene and propylene (EPR), an ethylene-propylene-diene terpolymer (EPDM), a copolymer of ethylene and vinyl acetate (EVA) with a low acetate content, a copolymer of ethylene and methyl acrylate (EMA) with a low acrylate content, a copolymer of ethylene and ethyl acrylate (EEA) with a low acrylate content, a copolymer of ethylene and butyl acrylate (EBA), with a low acrylate content, a copolymer of ethylene and octene, a polymer based on polystyrene, a halogenated polymer, a silicone and any mixture of these components.

22. The use according to claim 20 or claim 21, wherein the mineral filler is incorporated into the flame-retardant polymer composition in an amount from 1 to 80% by weight, advantageously from 40 to 75% by weight, based on the total weight of said flame-retardant polymer composition.

23. The use according to any of claims 13 to 21, wherein the particles have a particle size d₉₀ of lower than 80 µm, preferably lower than 60 µm.

24. The use according to any of claims 13 to 23, wherein the particles have a particle size d₉₇ of lower than 200 µm, preferably lower than 100 µm.

25. A combustion residue of a flame-retardant polymer composition according to any of claims 1 to 12, **characterized in that** the residue is a cohesive residue having an average compressive mechanical strength at breakage which is greater than 3 kPa, preferably greater than 8 kPa, preferentially greater than 20 kPa and particularly advantageously greater than 60 kPa.

26. The combustion residue according to claim 25, wherein said combustion residue is only crossed by a very limited number of cracks, lower than or equal to 3, preferably lower than or equal to 2, or even to one and particularly preferentially 0, after combustion according to the standardized method of the calorimeter cone ISO 5660-1 or ASTM E 1354.

27. : The combustion residue according to claim 25 or claim 26, having, after combustion according to the standardized method of the calorimeter cone ISO 5660-1 or ASTM E 1354, a maximum size of the combustion residue for which the section is assimilated to a square which may be sampled without breaking in said obtained residue, greater than or equal to 10 mm, preferably greater than or equal to 30 mm, preferably greater than or equal to 50 mm, from a sample before combustion of a square section of 100 mm.
